# EUROPEAN PATENT APPLICATION

(11) **EP 4 525 195 A1**
(43) Date of publication of application: **19.03.2025**
(21) Application number: 23802571.2
(22) Date of filing: 12.04.2023
(51) Int. Cl.: H01M 50/533

(54) **BATTERY, BATTERY PACK, AND VEHICLE**

(30) Priority: 12.05.2022 CN 202221134789 U
(71) Applicant: BYD Company Limited, Shenzhen, Guangdong 518118 (CN)
(72) Inventor: YUAN, Wansong, Shenzhen, Guangdong 518118 (CN); WANG, Xinyue, Shenzhen, Guangdong 518118 (CN); CHENG, Han, Shenzhen, Guangdong 518118 (CN); PAN, Qiu, Shenzhen, Guangdong 518118 (CN)
(74) Representative: Mathys & Squire
(86) International application number: PCT/CN2023/087757
(87) International publication number: WO 2023/216796

(57) **Abstract**

A battery, a battery pack, and a vehicle. The battery comprises: a battery casing; a pole core, arranged in the battery casing; and a positive electrode lead-out piece and a negative electrode lead-out piece, the positive electrode lead-out piece comprising a positive-electrode first connecting sheet, the negative electrode lead-out piece comprising a negative-electrode first connecting sheet, and the positive-electrode first connecting sheet and the negative-electrode first connecting sheet being distributed at two opposite ends of the pole core in the length direction of the battery casing. The distance between the positive-electrode first connecting sheet and the negative-electrode first connecting sheet in the length direction of the battery casing is L1, the size of the battery in the length direction of the battery casing is L, and L1 and L meet: 0.95 ≤ L1/L ≤ 0.99.

## Description

### CROSS-REFERENCE TO RELATED APPLICATIONS

The present disclosure claims priority to Chinese Patent Application No. 202221134789.6 filed on May 12, 2022 and entitled "Battery, battery pack and vehicle", which is incorporated herein by reference in its entirety.

### FIELD

The present disclosure relates to the technical field of batteries, and specifically to a battery, a battery pack, and a vehicle.

### BACKGROUND

A lead-out piece in a battery is connected between a conductive pole and a tab of an electrode core. The lead-out piece includes a positive electrode lead-out piece and a negative electrode lead-out piece. The positive electrode lead-out piece and the negative electrode lead-out piece are both arranged inside a casing, and thus occupies the internal space in the battery casing. In a battery in related art, a small distance exists between the positive electrode lead-out piece and the negative electrode lead-out piece, causing a reduced size of an electrode core located between the positive electrode lead-out piece and the negative electrode lead-out piece, and thus a reduced capacity of the battery as a whole.

### SUMMARY

The present disclosure aims to at least solve one of the technical problems in related art. To this end, an object of the present disclosure is to provide a battery. The battery ensures that a positive electrode lead-out piece and a negative electrode lead-out piece have sufficient conductivity, and the positive electrode lead-out piece and the negative electrode lead-out piece will not occupy too much space inside a battery casing, especially the space in a length direction of the battery casing.

The present disclosure further provides a battery pack having the battery.

The present disclosure further provides a vehicle having the battery.

The battery according to the present disclosure includes a battery casing; an electrode core, where the electrode core is arranged in the battery casing; a positive electrode lead-out piece, where the positive electrode lead-out piece is arranged in the battery casing and connected to a positive electrode tab of the electrode core; a negative electrode lead-out piece, where the negative electrode lead-out piece is arranged in the battery casing and connected to a negative electrode tab of the electrode core. The positive electrode lead-out piece includes a positive electrode first connecting sheet, and the negative electrode lead-out piece includes a negative electrode first connecting sheet. The positive electrode first connecting sheet and the negative electrode first connecting sheet are distributed at two opposite ends of the electrode core along a length direction of the battery casing. A distance between the positive electrode first connecting sheet and the negative electrode first connecting sheet in the length direction of the battery casing is L1, a size of the battery in the length direction of the battery casing is L, and L1 and L meet 0.95≤L1/L≤0.99.

According to the battery in accordance with the present disclosure, by setting L1 and L to meet 0.95≤L1/L≤0.99, the battery is ensured that the positive electrode lead-out piece and the negative electrode lead-out piece have sufficient conductivity, and the positive electrode lead-out piece and the negative electrode lead-out piece will not occupy too much space inside the battery casing, especially the space in the length direction of the battery casing.

According to an embodiment of the present disclosure, a thickness of the positive electrode first connecting sheet and the negative electrode first connecting sheet ranges from 0.6 mm to 2 mm.

According to an embodiment of the present disclosure, the electrode core 1has opposite first and second end surfaces. The positive electrode tab of the electrode core is led out from the first end surface, and the negative electrode tab of the electrode core is led out from the second end surface. A distance between the first end surface of the electrode core and the positive electrode first connecting sheet ranges from 2 to 12 mm in the length direction of the battery casing. A distance between the second end surface of the electrode core and the negative electrode first connecting sheet ranges from 2 to 12 mm in the length direction of the battery casing.

According to an embodiment of the present disclosure, the battery casing includes a first plate member and a second plate member directly facing each other in a length direction. The first plate member is arranged with a positive electrode conductive pole, and the second plate member is arranged with a negative electrode conductive pole. An inner end of the positive electrode conductive pole is connected to the positive electrode first connecting sheet; and an inner end of the negative electrode conductive pole is connected to the negative electrode first connecting sheet.

According to an embodiment of the present disclosure, the positive electrode first connecting sheet is parallel to the first plate member and connected to the positive electrode conductive pole. The negative electrode first connecting sheet is parallel to the second plate member and connected to the negative electrode conductive pole. A distance between an inner side surface of the positive electrode first connecting sheet and an inner side surface of the negative electrode first connecting sheet is "L1".

According to an embodiment of the present disclosure, the battery casing further includes a third plate member and a fourth plate member directly facing each other in a width direction. A distance between an inner side surface of the third plate member and an inner side surface of the fourth plate member is H1 in the width direction of the battery casing, a size of the battery is H in the width direction of the battery casing, and H1 and H meet 0.92≤H1/H≤0.98, where H1 and H are both in mm.

According to an embodiment of the present disclosure, the battery casing further includes a fifth plate member and a sixth plate member directly facing each other in a thickness direction. A distance between an inner side surface of the fifth plate member and an inner side surface of the sixth plate member in the thickness direction of the battery casing is D1, and a size of the battery in the thickness direction of the battery casing is D, where L>H>D, and D1 and D meet 0.93≤D1/D≤0.99, in which D1 and D are both in mm.

According to an embodiment of the present disclosure, the first plate member, the second plate member, the third plate member, the fourth plate member and the fifth plate member define a lower casing with an opening at a side, and the sixth plate member is fixedly connected to the lower casing to close an open end of the lower casing.

According to an embodiment of the present disclosure, the positive electrode lead-out piece further includes a positive electrode second connecting sheet connected to the positive electrode first connecting sheet and extending inward in the battery casing, and the positive electrode lead-out piece is connected, by the positive electrode second connecting sheet, to the positive electrode tab of the electrode core. The negative electrode lead-out piece further includes a negative electrode second connecting sheet connected to the negative electrode first connecting sheet and extending inward in the battery casing, and the negative electrode lead-out piece is connected, by the negative electrode second connecting sheet, to the negative electrode tab of the electrode core.

The battery pack according to the present disclosure includes the battery.

The vehicle according to the present disclosure includes the battery pack.

Other aspects and advantages of the present disclosure will be given in the following description, some of which will become apparent from the following description or may be learned from practices of the present disclosure.

### BRIEF DESCRIPTION OF THE DRAWINGS

The above and/or other additional aspects and advantages of the present disclosure will become apparent and comprehensible from the description of embodiments in connection with accompanying drawings, in which:
FIG. 1 is a schematic view showing a lower casing of a battery according to an embodiment of the present disclosure;
FIG. 2 is a schematic view showing a battery according to an embodiment of the present disclosure;
FIG. 3 is a partially enlarged schematic view of an encircled part C in FIG. 2;
FIG. 4 is a schematic view showing a battery according to an embodiment of the present disclosure;
FIG. 5 is a partially enlarged schematic view of an encircled part D in FIG. 4;
FIG. 6 is a schematic view showing a first positive electrode (negative electrode) conductive pole or a second positive electrode (negative electrode) conductive pole with a round cross section according to an embodiment of the present disclosure;
FIG. 7 is a schematic view showing a first positive electrode (negative electrode) conductive pole or a second positive electrode (negative electrode) conductive pole with a racetrack-like cross section according to an embodiment of the present disclosure;
FIG. 8 is a cross-sectional view of a battery according to an embodiment of the present disclosure;
FIG. 9 is a partially enlarged schematic view of an encircled part E in FIG. 8;
FIG. 10 is a partially enlarged schematic view of an encircled part H in FIG. 8;
FIG. 11 is a schematic view showing a first insulating spacer ring according to an embodiment of the present disclosure;
FIG. 12 is a schematic view showing a second insulating spacer ring fitting with a negative electrode lead-out piece according to an embodiment of the present disclosure;
FIG. 13 is a schematic view showing a positive electrode lead-out piece according to an embodiment of the present disclosure;
FIG. 14 is a schematic view showing a negative electrode lead-out piece according to an embodiment of the present disclosure;
FIG. 15 is an exploded view of a battery according to an embodiment of the present disclosure;
FIG. 16 is a schematic view showing a battery from one direction according to an embodiment of the present disclosure;
FIG. 17 is a schematic view showing a battery from another direction according to an embodiment of the present disclosure;
FIG. 18 is a schematic view showing a battery from another direction according to an embodiment of the present disclosure;
FIG. 19 is a schematic view showing a positive electrode conductive pole and a sealing ring of a battery fitting with a battery casing according to another embodiment of the present disclosure;
FIG. 20 is a schematic view showing a negative electrode conductive pole and a sealing ring of a battery fitting with a battery casing according to another embodiment of the present disclosure;
FIG. 21 shows temperature rise curves of a positive electrode conductive pole and a negative electrode conductive pole in a comparative embodiment and Embodiment 1;
FIG. 22 shows temperature rise curves of a positive electrode conductive pole and a negative electrode conductive pole in a comparative embodiment and Embodiment 2;
FIG. 23 shows temperature rise curves of a positive electrode conductive pole and a negative electrode conductive pole in a comparative embodiment and Embodiment 3;
FIG. 24 shows temperature rise curves of a positive electrode conductive pole and a negative electrode conductive pole in a comparative embodiment and Embodiment 4;
FIG. 25 shows temperature rise curves of a positive electrode conductive pole and a negative electrode conductive pole in a comparative embodiment and Embodiment 5;
FIG. 26 shows temperature rise curves of a positive electrode conductive pole and a negative electrode conductive pole in a comparative embodiment and Embodiment 6;
FIG. 27 shows temperature rise curves of a positive electrode conductive pole and a negative electrode conductive pole in a comparative embodiment and Embodiment 7;
FIG. 28 shows temperature rise curves of a positive electrode conductive pole and a negative electrode conductive pole in a comparative embodiment and Embodiment 8;
FIG. 29 shows temperature rise curves of a positive electrode lead-out piece and a negative electrode lead-out piece in a comparative embodiment and Embodiment 1;
FIG. 30 shows temperature rise curves of a positive electrode lead-out piece and a negative electrode lead-out piece in a comparative embodiment and Embodiment 2;
FIG. 31 shows temperature rise curves of a positive electrode lead-out piece and a negative electrode lead-out piece in a comparative embodiment and Embodiment 3;
FIG. 32 shows temperature rise curves of a positive electrode lead-out piece and a negative electrode lead-out piece in a comparative embodiment and Embodiment 4;
FIG. 33 shows temperature rise curves of a positive electrode lead-out piece and a negative electrode lead-out piece in a comparative embodiment and Embodiment 5;
FIG. 34 shows temperature rise curves of a positive electrode lead-out piece and a negative electrode lead-out piece in a comparative embodiment and Embodiment 6;
FIG. 35 shows temperature rise curves of a positive electrode lead-out piece and a negative electrode lead-out piece in a comparative embodiment and Embodiment 7; and
FIG. 36 shows temperature rise curves of a positive electrode lead-out piece and a negative electrode lead-out piece in a comparative embodiment and Embodiment 8.

### List of reference numerals:

100 battery,
110 battery casing, 111 first plate member, 112 second plate member, 113 third plate member, 114 fourth plate member, 115 fifth plate member, 116 sixth plate member,
120 electrode core,
131 positive electrode conductive pole, 131a first positive electrode conductive pole, 131b second positive electrode conductive pole, 131c first connecting piece, 131d first insulating plate, 131e positive electrode conductive pole flanged edge,
132 negative electrode conductive pole, 132a first negative electrode conductive pole, 132b second negative electrode conductive pole, 132c second connecting piece, 132d second insulating plate, 132e negative electrode conductive pole flanged edge,
141 positive electrode lead-out piece, 141a positive electrode first connecting sheet, 141b positive electrode second connecting sheet,
142 negative electrode lead-out piece, 142a negative electrode first connecting sheet, 142b negative electrode second connecting sheet,
151 first sealing ring, 152 second sealing ring,
161 first insulating spacer ring, 161a first support member, 161b first insulating member vertical plate, 161c first insulating member horizontal plate,
162 second insulating spacer ring, 162a second support member, 162b second insulating member vertical plate, 162c second insulating member horizontal plate,
101 electrolyte solution infiltrating through hole, 102 via hole.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

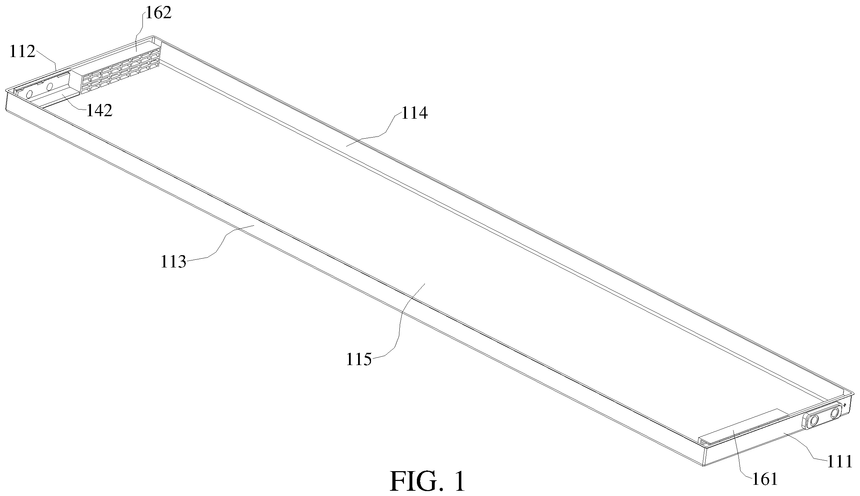

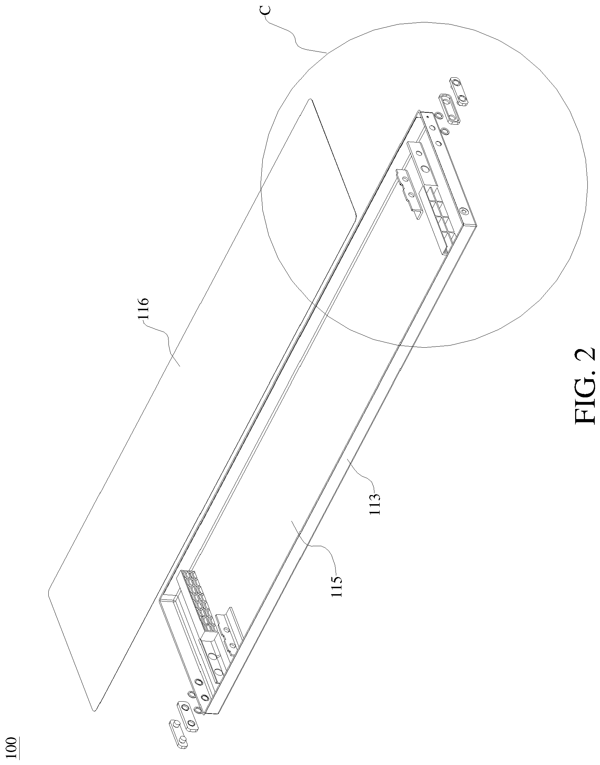

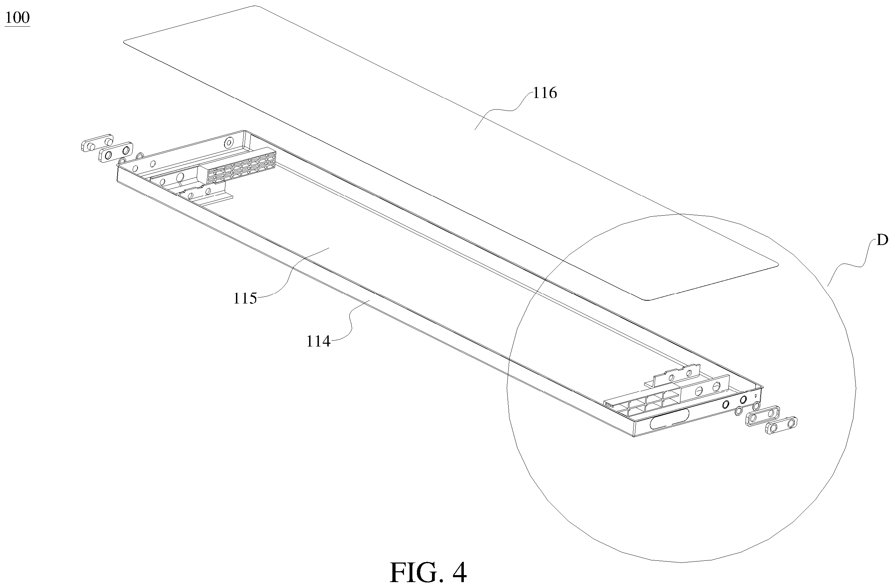

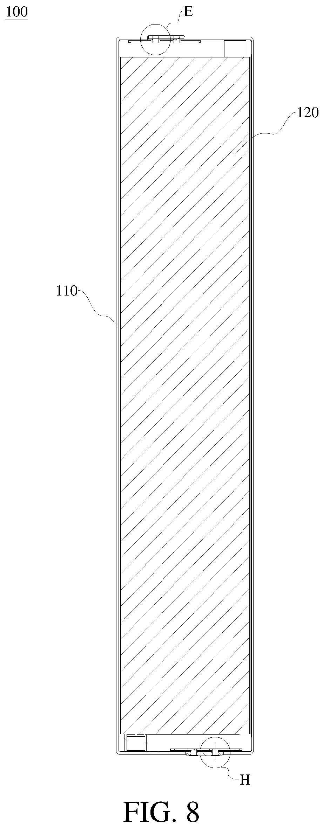

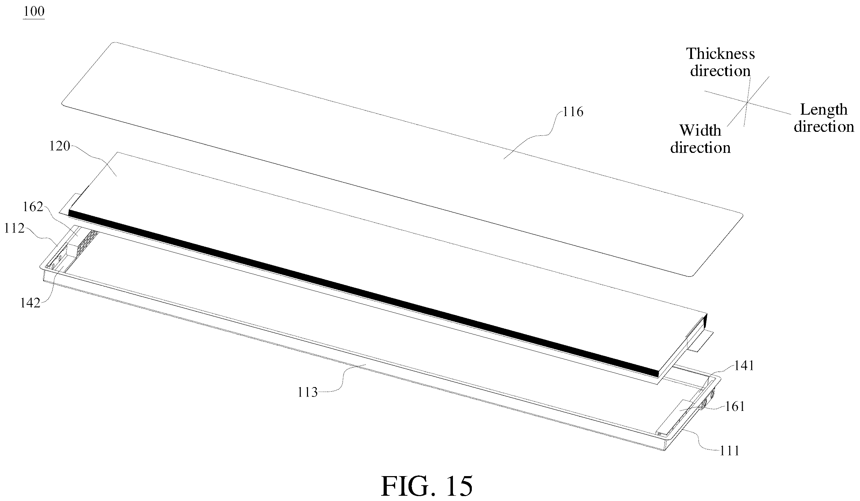

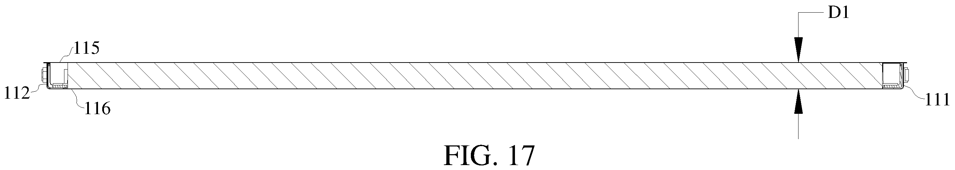

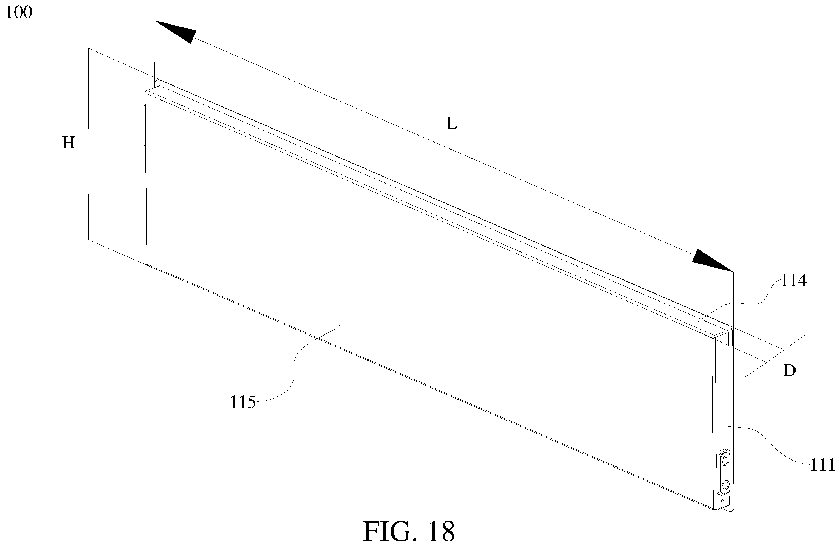

A battery 100 according to embodiments of the present disclosure will be described below with reference to FIGs. 1-36.

The battery according to an embodiment of the present disclosure includes a battery casing 110, an electrode core 120 and a conductive pole.

The electrode core 120 is arranged inside the battery casing 110, the conductive pole extends through the battery casing 110 such that an inner end of the conductive pole is connected to the electrode core 120, and an outer end of the conductive pole extends out of the battery casing 110. Particularly, the inner end of the conductive pole is connected to a tab of the electrode core 120. Moreover, the conductive pole has a cross-sectional area of s, the battery has a capacity of C, and s and C meet a relational formula: C/s≤8, where s is in mm², and C is in Ah.

It can be understood that the size of the cross-sectional area of the conductive pole represents a current passage capacity of the conductive pole. As the cross-sectional area of the conductive pole increases, the current passage capacity of the conductive pole increases. Moreover, a smallest cross-sectional area on the conductive pole determines the current passage capacity of the conductive pole. The cross section of the conductive pole is a plane perpendicular to a current flow direction. If the conductive pole is a cylinder and the current flow direction through the conductive pole is the axial direction of the conductive pole, then the cross section of the conductive pole is a round radial cross section. When the conductive pole adopts a varying cross-section design, the cross-section area of the conductive pole can be understood as an area of a smallest cross-section on the conductive pole.

After extensive experiments and argumentations, the inventors of the present disclosure find that when the relational formula C/s≤8 is met, the current passage capacity of the conductive pole of the battery 100 can be ensured, to ensure that the temperature during use of the battery 100 will not exceed the temperature range for use of the battery 100 due to large heat generation caused by a small current passage area and the thermal safety problems of the battery 100 will not be incurred.

In some embodiments of the present disclosure, the cross-sectional area s of the conductive pole and the battery capacity C meet a relational formula: 6/5≤C/s≤8. The present inventors find that the ratio of the battery capacity C to the cross-sectional area s of the conductive pole is not desirably as small as possible. A too small ratio will cause a too large size of the conductive pole, resulting in a redundant design.

In some embodiments of the present disclosure, the conductive pole includes a positive electrode conductive pole 131 and a negative electrode conductive pole 132. A cross-sectional area s1 of the positive electrode conductive pole 131 and the battery capacity C meet a relational formula: 6/5≤C/s1≤16/3; and a cross-sectional area s2 of the negative electrode conductive pole 132 and the battery capacity C meet a relational formula: 6/5≤C/s2≤8, where s1 and s2 are both in mm². It can be understood that when the positive electrode conductive pole 131 includes multiple positive electrode poles extending through the battery casing 110 and connected to a positive electrode tab of the electrode core 120, the cross-sectional area s1 of the positive electrode conductive pole 131 is a sum of the cross-sectional areas of the multiple positive electrode poles. When the positive electrode pole adopts a varying cross-section design, the cross-section area of the positive electrode pole can be understood as an area of a smallest cross-section on the positive electrode pole. When the negative electrode conductive pole 132 includes multiple negative electrode poles extending through the battery casing 110 and connected to a negative electrode tab of the electrode core 120, the cross-sectional area s2 of the negative electrode conductive pole 132 is a sum of the cross-sectional areas of the multiple negative electrode poles. When the negative electrode pole adopts a varying cross-section design, the cross-section area of the negative electrode pole can be understood as an area of a smallest cross-section on the negative electrode pole.

Further, the cross-sectional area s1 of the positive electrode conductive pole 131 and the battery capacity C meet a relational formula: 8/3≤C/s1≤16/3; and the cross-sectional area s2 of the negative electrode conductive pole 132 and the battery capacity C meet a relational formula: 3≤C/s2≤8.

It should be noted that the positive electrode conductive pole 131 of the battery100 can be made of aluminum, and the negative electrode conductive pole 132 can be made of copper. However, the conductivity of aluminum and copper is different. With the same cross-sectional area, the current passage capacity of copper is larger than the current passage capacity of aluminum. Therefore, to ensure that the positive electrode conductive pole 131 and the negative electrode conductive pole 132 have the same current passage capacity, the negative electrode conductive pole 132 made of copper can be made to have a smaller cross-sectional area.

In some embodiments of the present disclosure, the cross-sectional area s1 of the positive electrode conductive pole and the cross-sectional area s2 of the negative electrode conductive pole range from 12 mm² to 315 mm², and the battery capacity C ranges from 30 Ah to 400 Ah.

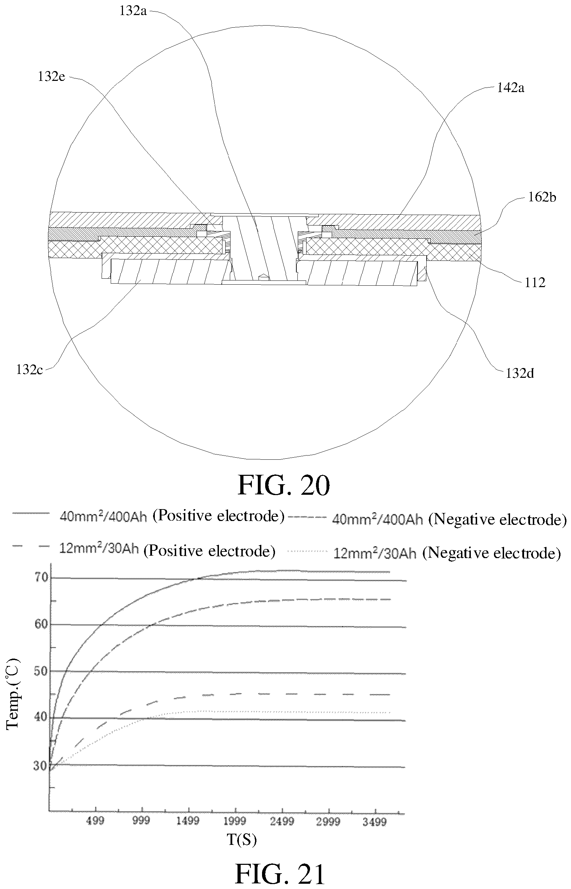

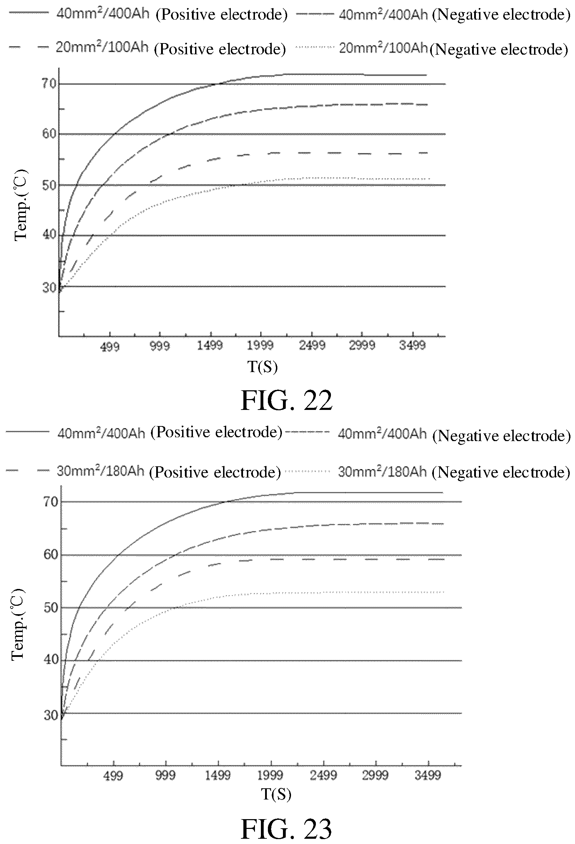

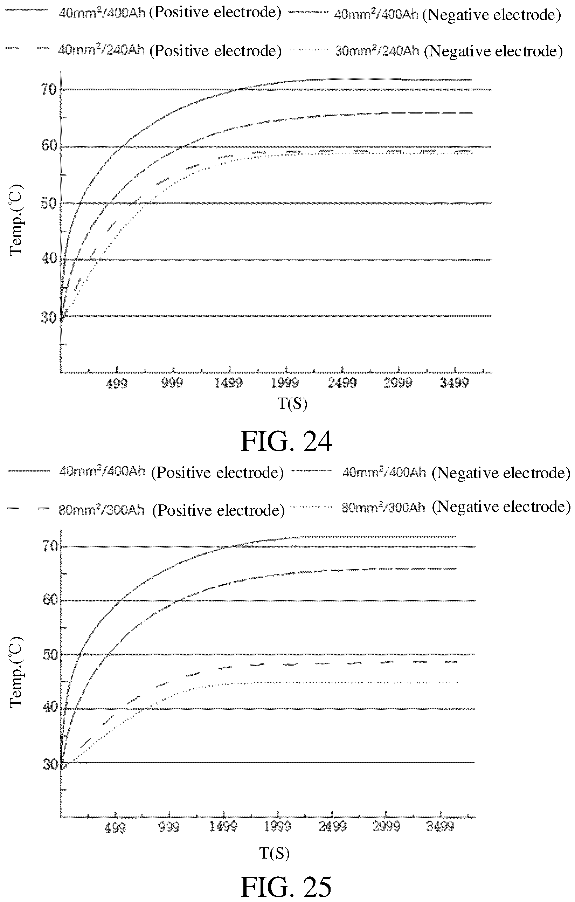

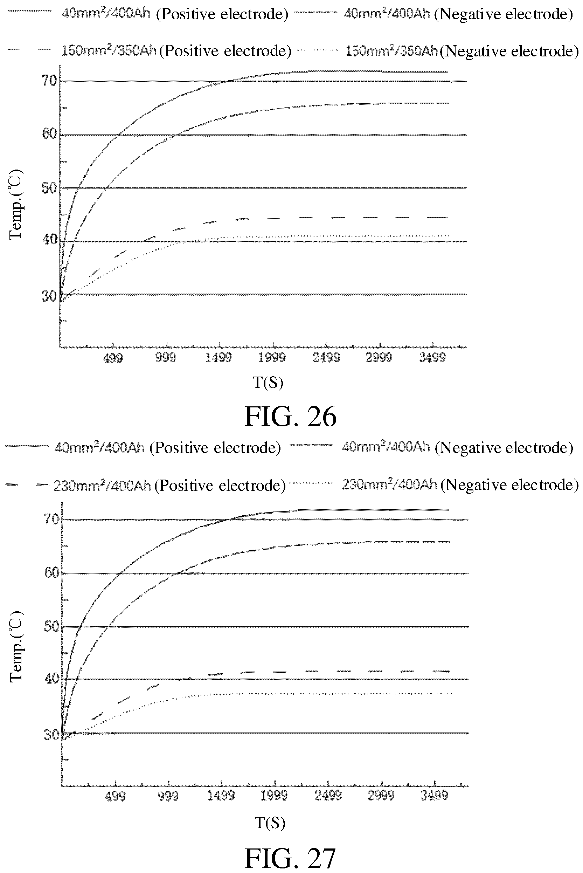

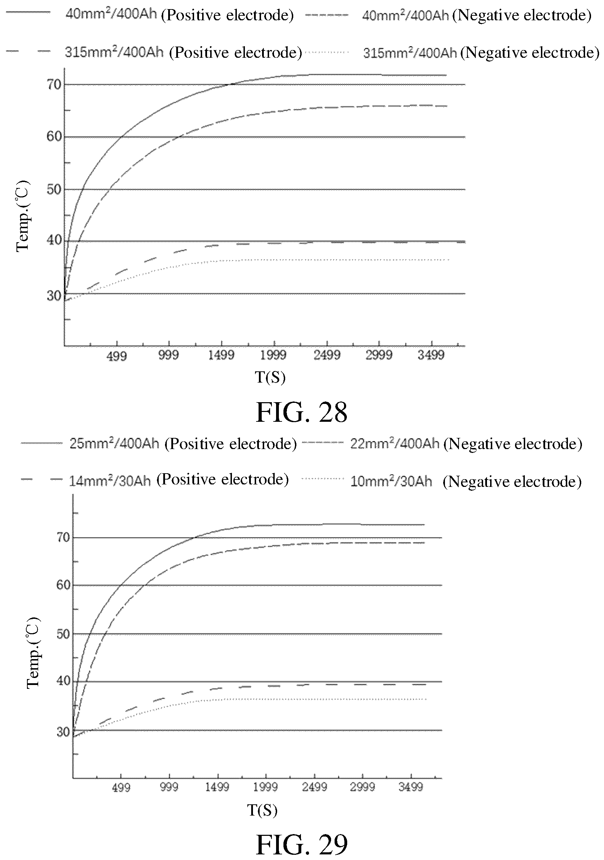

Description is made in connection with the comparative embodiment (that is, related art) and Embodiments 1-8 (embodiments of the present disclosure) in Table 1 below. Under the same working conditions, the batteries in the comparative embodiment and Embodiments 1-8 are charged at a rate of 2C respectively, and the temperature rise curves of the positive electrode conductive pole 131 and the negative electrode conductive pole 132 are recorded. The cross-sectional area s1 of the positive electrode conductive pole 131, the cross-sectional area s2 of the negative electrode conductive pole 132, and the total battery capacity C in the comparative embodiment and Embodiments 1-8 are selected from data in Table 1 below. FIG. 21 shows temperature rise curves of the positive electrode conductive pole 131 and the negative electrode conductive pole 132 in the comparative embodiment and Embodiment 1. FIG. 22 shows temperature rise curves of the positive electrode conductive pole 131 and the negative electrode conductive pole 132 in the comparative embodiment and Embodiment 2. FIG. 23 shows temperature rise curves of the positive electrode conductive pole 131 and the negative electrode conductive pole 132 in the comparative embodiment and Embodiment 3. FIG. 24 shows temperature rise curves of the positive electrode conductive pole 131 and the negative electrode conductive pole 132 in the comparative embodiment and Embodiment 4. FIG. 25 shows temperature rise curves of the positive electrode conductive pole 131 and the negative electrode conductive pole 132 in the comparative embodiment and Embodiment 5. FIG. 26 shows temperature rise curves of the positive electrode conductive pole 131 and the negative electrode conductive pole 132 in the comparative embodiment and Embodiment 6. FIG. 27 shows temperature rise curves of the positive electrode conductive pole 131 and the negative electrode conductive pole 132 in the comparative embodiment and Embodiment 7. FIG. 28 shows temperature rise curves of the positive electrode conductive pole 131 and the negative electrode conductive pole 132 in the comparative embodiment and Embodiment 8.

**Table 1**

| | S1/mm² | S2/mm² | C/Ah | C/S1 | C/S2 |
|---|---|---|---|---|---|
| Comparative Embodiment | 40 | 40 | 400 | 10 | 10 |
| Embodiment 1 | 12 | 12 | 30 | 2.5 | 2.5 |
| Embodiment 2 | 20 | 20 | 100 | 5 | 5 |
| Embodiment 3 | 30 | 30 | 180 | 6 | 6 |
| Embodiment 4 | 40 | 30 | 240 | 6 | 8 |
| Embodiment 5 | 80 | 80 | 300 | 3.75 | 3.75 |
| Embodiment 6 | 150 | 150 | 350 | 2.333333333 | 2.333333333 |
| Embodiment 7 | 230 | 230 | 400 | 1.739130435 | 1.739130435 |
| Embodiment 8 | 315 | 315 | 400 | 1.26984127 | 1.26984127 |

After many experiments, the comparison results between the current passage capacities of the conductive pole of the present disclosure and the conductive pole in prior art, as shown in FIGs. 21-28, are obtained by the present inventors.

Compared with the comparative embodiment, the temperature rises of the positive electrode conductive pole 131 and the negative electrode conductive pole 132 in Embodiments 1 to 8 are relatively low, thus ensuring that the batteries are in a good working status.

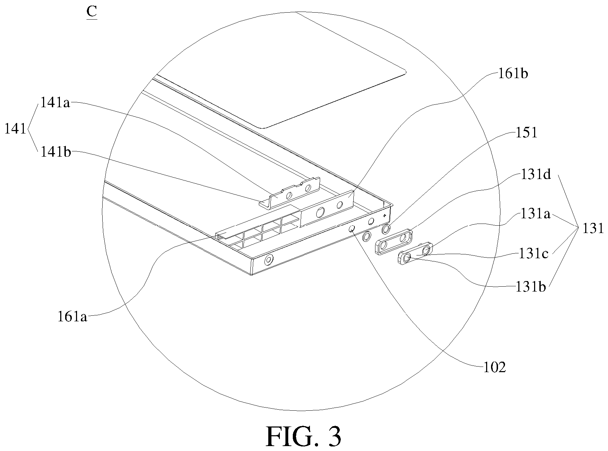

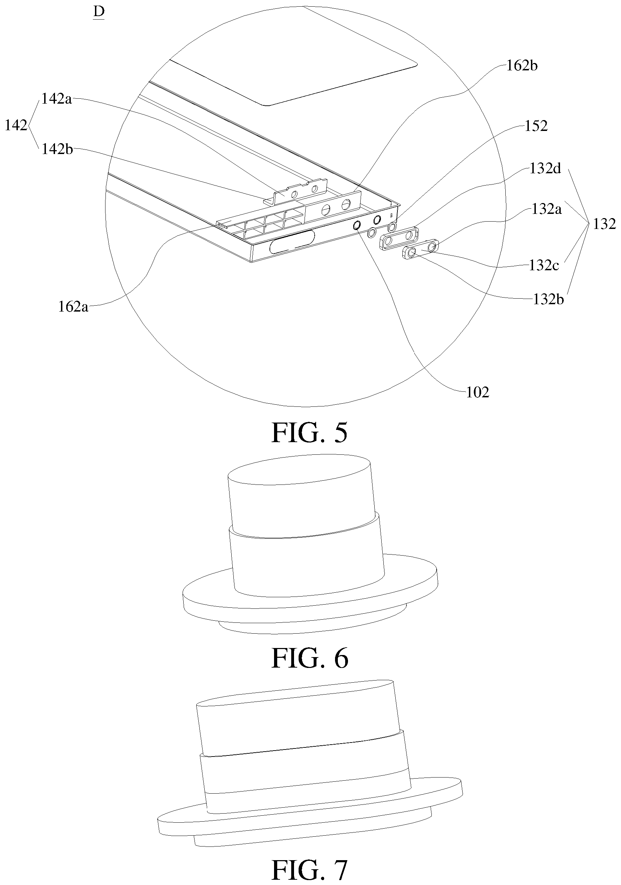

Further, as shown in FIGs. 3 and 5, the positive electrode conductive pole 131 includes a first positive electrode conductive pole 131a, a second positive electrode conductive pole 131b and a first connecting piece 131c. Both the first positive electrode conductive pole 131a and the second positive electrode conductive pole 131b extend through the battery casing 110 and are connected to the positive electrode tab of the electrode core 120. The first connecting piece 131c is arranged outside of the battery casing 110 and electrically connected to the first positive electrode conductive pole 131a and the second positive electrode conductive pole 131b. The cross-sectional area s1 of the positive electrode conductive pole 131 is a sum of a cross-sectional area of the first positive electrode conductive pole 131a and a cross-sectional area of the second positive electrode conductive pole 131b.

The negative electrode conductive pole 132 includes a first negative electrode conductive pole 132a, a second negative electrode conductive pole 132b and a second connecting piece 132c. Both the first negative electrode conductive pole 132a and the second negative electrode conductive pole 132b extends through the battery casing 110 and is connected to the negative electrode tab of the electrode core 120. The second connecting piece 132c is arranged outside of the battery casing 110 and electrically connected to the first negative electrode conductive pole 132a and the second negative electrode conductive pole 132b. The cross-sectional area s2 of the negative electrode conductive pole 132 is a sum of a cross-sectional area of the first negative electrode conductive pole 132a and a cross-sectional area of the second negative electrode conductive pole 132b.

The first connecting piece 131c is connected between an outer end of the first positive electrode conductive pole 131a and an outer end of the second positive electrode conductive pole 131b, to increase a contact area between the first positive electrode conductive pole 131a and the second positive electrode conductive pole 131b, and permit the positive electrode conductive pole 131 to be connected to the outside more conveniently. The second connecting piece 132c is connected between an outer end of the first negative electrode conductive pole 132a and an outer end of the second negative electrode conductive pole 132b, to increase a contact area between the first negative electrode conductive pole 132a and the second negative electrode conductive pole 132b, and permit the negative electrode conductive pole 132 to be connected to the outside more conveniently.

In some embodiments of the present disclosure, the first positive electrode conductive pole 131a and the second positive electrode conductive pole 131b have a round or waist-shaped cross section, and the first negative electrode conductive pole 132a and the second negative electrode conductive pole 132b have a round or waist-shaped cross section. If a size of the battery casing 110 is large in a thickness direction, the first positive electrode conductive pole 131a, the second positive electrode conductive pole 131b, the first negative electrode conductive pole 132a, and the second negative electrode conductive pole 132b having a round cross section can be used. However, if the size of the battery casing 110 is small in the thickness direction, the first positive electrode conductive pole 131a, the second positive electrode conductive pole 131b, the first negative electrode conductive pole 132a, and the second negative electrode conductive pole 132b having a waist-shaped cross section can be used. In this way, the first positive electrode conductive pole 131a, the second positive electrode conductive pole 131b, the first negative electrode conductive pole 132a, and the second negative electrode conductive pole 132b will not exceed the size of the battery casing 110 in the thickness direction, while the positive electrode conductive pole 131 and the negative electrode conductive pole 132 are ensured to have a sufficient current passage capacity.

In some embodiments of the present disclosure, as shown in FIGs. 1-4 and 15-20, the battery casing 110 includes a first plate member 111 and a second plate member 112 directly facing each other in a length direction of the battery 100, a third plate member 113 and a fourth plate member 114 directly facing each other in a width direction of the battery 100, and a fifth plate member 115 and a sixth plate member 116 directly facing each other in a thickness direction of the battery 100. The size of the battery 100 in the length direction is larger than the size of the battery 100 in the width direction, and the size of the battery 100 in the width direction is larger than the size of the battery 100 in the thickness direction.

The first plate member 111 and the second plate member 112 are respectively connected to ends at one side and ends at the other side of the third plate member 113 and the fourth plate member 114 in the length direction of the battery 100. The fifth plate member 115 and the sixth plate member 116 are respectively connected to ends at one side and ends at the other side of the third plate member 113 and the fourth plate member 114 in the length direction of the battery 100.

The first plate member 111 is arranged with the positive electrode conductive pole 131, and the second plate member 112 is arranged with the negative electrode conductive pole 132. A first insulating plate 131d is arranged between the first plate member 111 and the first connecting piece 131c, and a second insulating plate 132d is arranged between the second plate member 112 and the second connecting piece 132c, to effectively avoid the electrical connection between the first connecting piece 131c and the battery casing 110 and the electrical connection between the second connecting piece 132c and the battery casing 110.

Further, the first plate member 111 is provided with a first via hole for the first positive electrode conductive pole 131a to extend through and a second via hole for the second positive electrode conductive pole 131b to extend through. The second plate member 112 is provided with a third via hole for the first negative electrode conductive pole 132a to extend through and a fourth via hole for the second negative electrode conductive pole 132b to extend through.

The battery casing 110 is also internally arranged with a positive electrode lead-out piece 141 and a negative electrode lead-out piece 142. The positive electrode lead-out piece 141 is connected to the positive electrode tab of the electrode core 120, and the positive electrode lead-out piece 141 is also connected to the positive electrode conductive pole 131. The negative electrode lead-out piece 142 is connected to the negative electrode tab of the electrode core 120, and the negative electrode lead-out piece 142 is also connected to the negative electrode conductive pole 132.

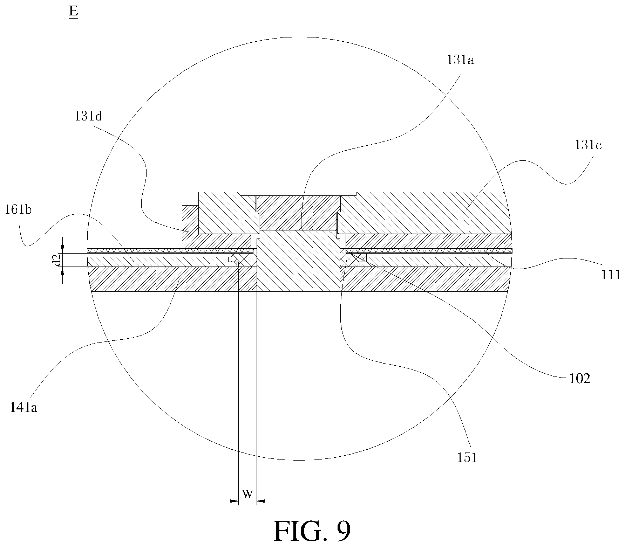

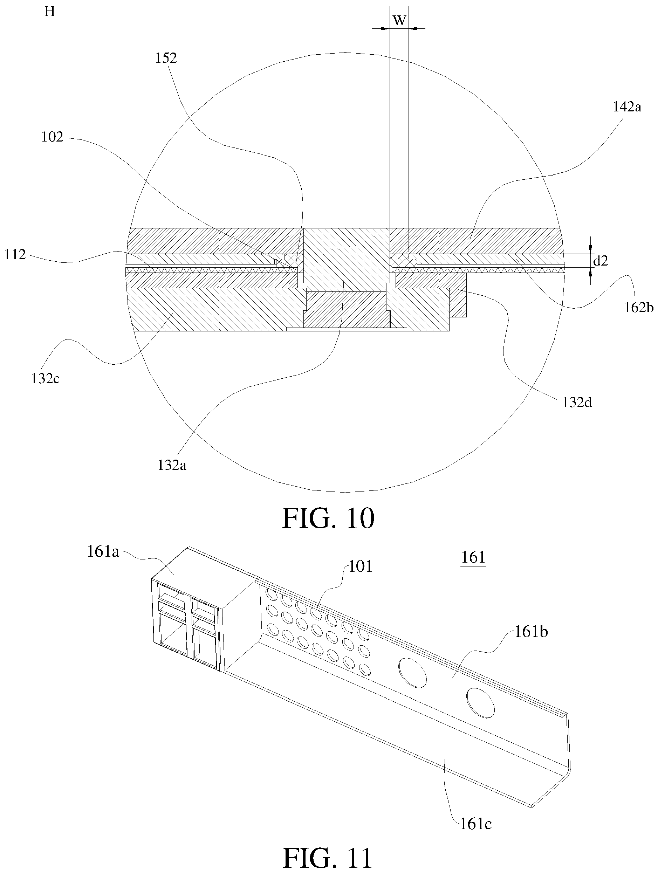

As shown in FIGs. 9 and 10, a first sealing ring 151 is sleeved on the positive electrode conductive pole 131 and the first sealing ring 151 is sandwiched between the positive electrode lead-out piece 141 and the first plate member 111. A second sealing ring 152 is sleeved on the negative electrode conductive pole 132 and the second sealing ring 152 is sandwiched between the negative electrode lead-out piece 142 and the second plate member 112. Therefore, the positive electrode conductive pole 131 is limited by the first sealing ring 151, so that the positive electrode conductive pole 131 will not contact an inner wall surface of the via hole on the first plate member 111 through which it extends. The negative electrode conductive pole 132 is limited by the second sealing ring 152, such that the negative electrode conductive pole 132 will not contact an inner wall surface of the via hole on the second plate member 112 through which it extends.

A first insulating spacer ring 161 is also arranged between the positive electrode lead-out piece 141 and the first plate member 111. The positive electrode conductive pole 131 extends through the first insulating spacer ring 161 and is connected to the positive electrode lead-out piece 141. The first insulating spacer ring 161 is an insulating member. By using the first insulating spacer ring 161, the contact between the positive electrode lead-out piece 141 and the battery casing 110 can be avoided, thus improving the safety performance of the battery 100.

A second insulating spacer ring 162 is also arranged between the negative electrode lead-out piece 142 and the second plate member 112. The negative electrode conductive pole 132 extends through the second insulating spacer ring 162 and is connected to the negative electrode lead-out piece 142. The second insulating spacer ring 162 is an insulating member. By using the second insulating spacer ring 162, the contact between the negative electrode lead-out piece 142 and the battery casing 110 can be avoided, thus improving the safety performance of the battery 100.

Further, an outer side surface of the first insulating spacer ring 161 is arranged with a first step portion fitting with an inner end of the first sealing ring 151. The first step portion can limit the movement of the first sealing ring 151 and the positive electrode conductive pole 131, to avoid the direct contact between the positive electrode conductive pole 131 and the battery casing 110. An outer side surface of the second insulating spacer ring 162 is arranged with a second step portion fitting with an inner end of the second sealing ring 152. The second step portion can limit the movement of the second sealing ring 152 and the negative electrode conductive pole 132, to avoid the direct contact between the negative electrode conductive pole 132 and the battery casing 110.

It can be understood that a portion of the inner end of the positive electrode conductive pole 131 fitting with the step portion on the first insulating spacer ring 161, and the other portion of the positive electrode conductive pole 131 abuts against the positive electrode lead-out piece 141. A portion of the inner end of the negative electrode conductive pole 132 fitting with the step portion on the second insulating spacer ring 162, and the other portion of the negative electrode conductive pole 132 abuts against the negative electrode lead-out piece 142.

In some embodiments of the present disclosure, a size of a first insulating member vertical plate 161b and a second insulating member vertical plate 162b ranges from 0.3 mm to 1.5 mm in the length direction of the battery casing. This is for the purpose of ensuring the insulation between the positive electrode lead-out piece 141 and the battery casing 110 and between the negative electrode lead-out piece 142 and the battery casing 110 and occupying as little space as possible in the length direction in the battery casing 110. When the thickness is less than 0.3 mm, it is possible that the welding heat will melt the spacer ring when the tab is welded to the lead-out piece, resulting in insufficient insulation. When the thickness is greater than 1.5 mm, too much space in the battery casing 110 is occupied, which reduces the space utilization rate and affects the design capacity of the battery 100. Therefore, after many tests and adjustments by the inventors of the present disclosure, the size of the first insulating member vertical plate 161b and the second insulating member vertical plate 162b in the length direction of the battery casing 110 is determined to range from 0.3 mm to 1.5 mm.

As shown in FIGs. 11-12, the first insulating spacer ring 161 includes a first support member 161a and a first insulating member connected to the first support member 161a. An inner end and an outer end of the first support member 161a abut against the electrode core 120 and the first plate member 111 of the battery 100 respectively. The first insulating member fits with the positive electrode lead-out piece 141 and is arranged between the positive electrode lead-out piece 141 and the battery casing 110. The second insulating spacer ring 162 includes a second support member 162a and a second insulating member connected to the second support member 162a. An inner end and an outer end of the second support member 162a abut against an end of the electrode core 120 and the second plate member 112 respectively. The second insulating member fits with the negative electrode lead-out piece 142 and is arranged between the negative electrode lead-out piece 142 and the battery casing 110.

The first insulating member includes a first insulating member vertical plate 161b and a first insulating member horizontal plate 161c. The first insulating member vertical plate 161b is arranged between a positive electrode first connecting sheet 141a and the first plate member 111, and the first insulating member horizontal plate 161c is arranged between a positive electrode second connecting sheet 141b and one side plate of the battery casing 110 in the thickness direction. The second insulating member includes a second insulating member vertical plate 162b and a second insulating member horizontal plate 162c. The second insulating member vertical plate 162b is arranged between a negative electrode first connecting sheet 142a and the second plate member 112, and the second insulating member horizontal plate 162c is arranged between a negative electrode second connecting sheet 142b and one side plate of the battery casing 110 in the thickness direction.

In some embodiments of the present disclosure, the first plate member 111, the second plate member 112, the third plate member 113, the fourth plate member 114 and the fifth plate member 115 define a lower casing with an opening at a side, and the sixth plate member 116 is fixedly connected to the lower casing to close an open end of the lower casing. Therefore, the electrode core 120 has no need to enter the battery casing 110 through a narrow passage, but enters the battery casing 110 through a very spacious open end, thus greatly reducing the installation cost and saving the installation time.

Particularly, the first insulating member horizontal plate 161c is arranged between the positive electrode second connecting sheet 141b and the fifth plate member 115, and the second insulating member horizontal plate 162c is arranged between the negative electrode second connecting sheet 142b and the fifth plate member 115.

The size of the first support member 161a in the length direction of the battery casing 110 is greater than the size of the first insulating member vertical plate 161b in the length direction of the battery casing 110. The size of the second support member 162a in the length direction of the battery casing 110 is greater than the size of the second insulating member vertical plate 162b in the length direction of the battery casing 110. Therefore, the first support member 161a and the second support member 162a can firmly clamp the electrode core 120 in the battery casing 110 to prevent the movement of the electrode core 120 in the battery casing 110.

In some embodiments of the present disclosure, an outer end surface of the positive electrode conductive pole 131 extends out of the battery casing and has a distance ranging from 2 mm to 5 mm to an outer side surface of the first plate member 111. An outer end surface of the negative electrode conductive pole 132 extends out of the battery casing and has a distance ranging from 2 mm to 5 mm to an outer side surface of the second plate member 112. Therefore, both the positive electrode conductive pole 131 and the negative electrode conductive pole 132 are ensured to have enough protrusions to connect with an external electrical device, and not to occupy too much space of the battery 100 in the length direction when the overall length of the battery100 is definite, thus ensuring that the battery 100 has enough capacity.

In the battery 100 according to the embodiment of the present disclosure, both the electrode core 120 and the lead-out piece are arranged in the battery casing 110. The lead-out piece and the electrode core 120 are connected. Particularly, the lead-out piece is connected to the tab of the electrode core 120. The conductive pole extends through the battery casing 110. The inner end of the conductive pole is connected to the lead-out piece, and the outer end of the conductive pole extends out of the battery casing 110. In the way, the charge and discharge of the electrode core 120 can be implemented by the conductive pole.

A cross-sectional area s_{lead} of the lead-out piece and the battery capacity C meet a relational formula C/s_{lead} ≤ 15. It should be noted that the cross-sectional area of the lead-out piece determines a current passage capacity of the lead-out piece. Therefore, the current passage capacity of the lead-out piece is represented by a ratio of the battery capacity to the cross-sectional area of the lead-out piece in this relational formula. It should be noted that the cross section of the lead-out piece is a plane perpendicular to a current flow direction or a plane perpendicular to the thickness direction of the lead-out piece. When the lead-out piece adopts a varying cross-section design, the cross-sectional area of the lead-out piece is the smallest cross-sectional area on the lead-out piece.

After extensive tests, the inventors of the present disclosure find that when the relational formula is met, the current passage capacity of the lead-out piece can be ensured, to ensure that the temperature of the lead-out piece during use of the battery 100 will not suffer large heat generation caused by a small current passage area, the temperature distribution inside the battery 100 will not be affected, the internal temperature of the battery 100 will not be caused to exceed the temperature range for use of the battery 100, and thermal safety problems of the battery100 will not be incurred.

Further, the cross-sectional area s_{lead} of the lead-out piece and the battery capacity C meet a relational formula: 2≤C/s_{lead} ≤ 15. Therefore, the lead-out piece is further ensured to have sufficient current passage capacity. The present inventors find that the ratio of the battery capacity C to the cross-sectional area s_{lead} of the lead-out piece is not desirably as small as possible. A too small ratio will cause a too large size of the lead-out piece, resulting in a redundant design and the occupation of too much space in the battery.

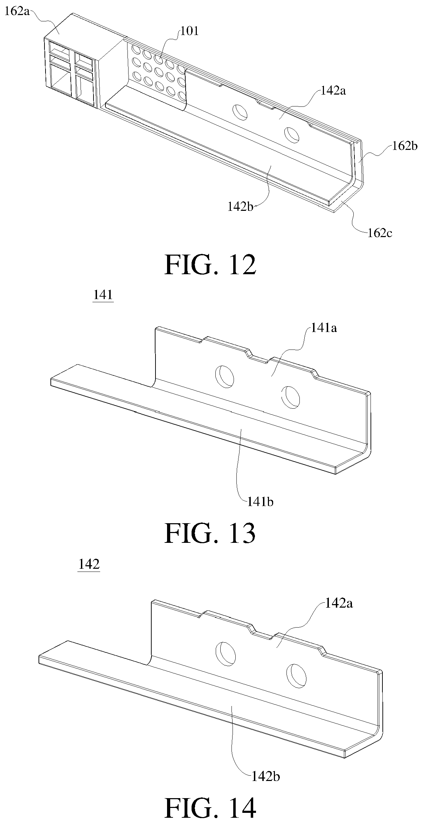

In some embodiments of the present disclosure, as shown in FIGs. 13-14, the lead-out piece includes a positive electrode lead-out piece 141 and a negative electrode lead-out piece 142, and the conductive pole includes a positive electrode conductive pole 131 and a negative electrode conductive pole 132. The positive electrode conductive pole 131 extends through the battery casing 110 and is connected to the positive electrode lead-out piece 141. The negative electrode conductive pole 132 extends through the battery casing 110 and is connected to the negative electrode lead-out piece 142. The positive electrode lead-out piece 141 is connected to the positive electrode tab of the electrode core 120, and the negative electrode lead-out piece 142 is connected to the negative electrode tab of the electrode core 120.

A cross-sectional area s_{positive lead} of the positive electrode lead-out piece 141 and the battery capacity C meet a relational formula: 5≤C/s_{positive lead}≤12. A cross-sectional area s_{negative lead} of the negative electrode lead-out piece 142 and the battery capacity C meet a relational formula: 6≤C/s_{negative lead}≤15. The positive electrode lead-out piece 141 can be an aluminum sheet and the negative electrode lead-out piece 142 can be a copper sheet. Because with the same cross-sectional area, the current passage capacity of the aluminum sheet is smaller than the current passage capacity of the copper sheet, the cross section of the copper sheet is reduced on the premise that the positive electrode lead-out piece 141 and the negative electrode lead-out piece 142 have the same current passage capacity.

In some embodiments of the present disclosure, the cross-sectional area of the positive electrode lead-out piece 141 ranges from 14 mm² to 150 mm², the cross-sectional area of the negative electrode lead-out piece 142 ranges from 10 mm² to 130 mm², and the battery capacity C ranges from 30 Ah-400 Ah.

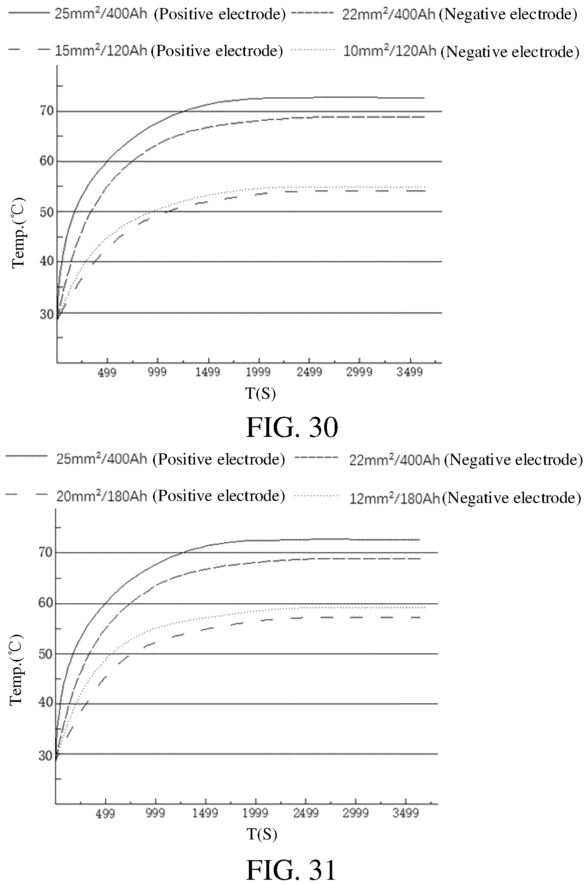

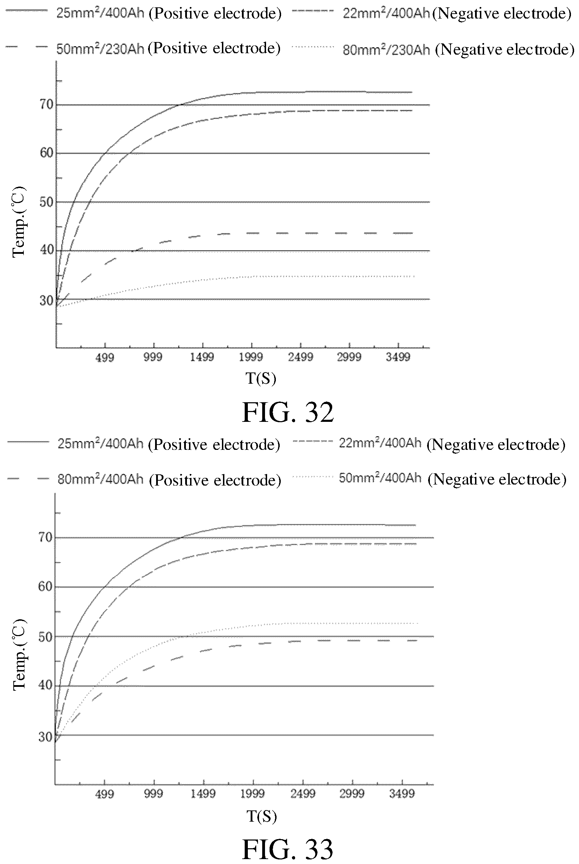

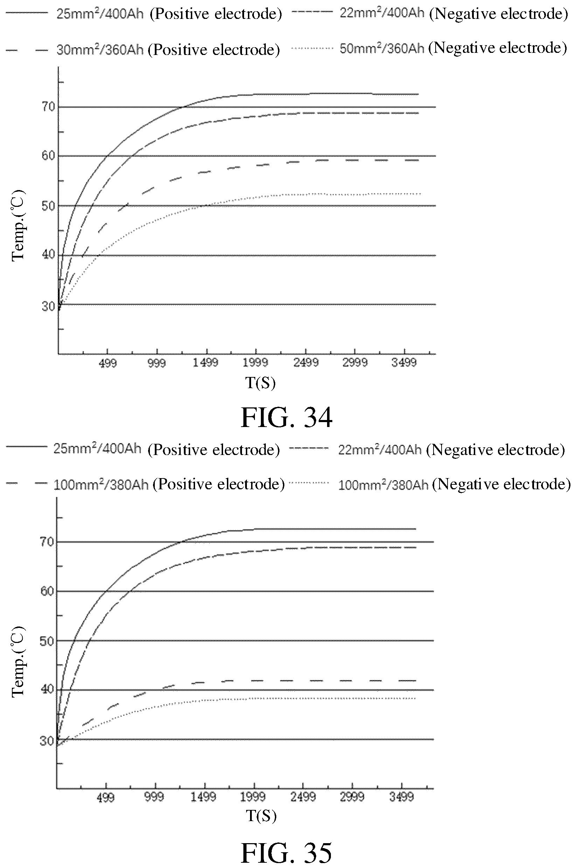

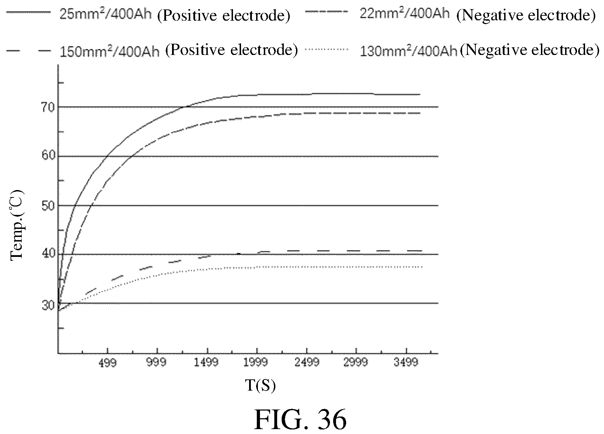

Description is made in connection with the comparative embodiment (that is, related art) and Embodiments 1-8 (embodiments of the present disclosure) in Table 2 below. Under the same working conditions, the batteries in the comparative embodiment and Embodiments 1-8 are charged at a rate of 2C respectively, and the temperature rise curves of the positive electrode lead-out piece 141 and the negative electrode lead-out piece 142 are recorded. The cross-sectional area s_{positive lead} of the positive electrode lead-out piece 141, the cross-sectional area s_{negative lead} of the negative electrode lead-out piece 142, and the total battery capacity C in the comparative embodiment and Embodiments 1-8 are selected from data in Table 2 below. FIG. 29 shows temperature rise curves of the positive electrode lead-out piece 141 and the negative electrode lead-out piece 142a in the comparative embodiment and Embodiment 1. FIG. 30 shows temperature rise curves of the positive electrode lead-out piece 141 and the negative electrode lead-out piece 142a in the comparative embodiment and Embodiment 2. FIG. 31 shows temperature rise curves of the positive electrode lead-out piece 141 and the negative electrode lead-out piece 142a in the comparative embodiment and Embodiment 3. FIG. 32 shows temperature rise curves of the positive electrode lead-out piece 141 and the negative electrode lead-out piece 142a in the comparative embodiment and Embodiment 4. FIG. 33 shows temperature rise curves of the positive electrode lead-out piece 141 and the negative electrode lead-out piece 142a in the comparative embodiment and Embodiment 5. FIG. 34 shows temperature rise curves of the positive electrode lead-out piece 141 and the negative electrode lead-out piece 142a in the comparative embodiment and Embodiment 6. FIG. 35 shows temperature rise curves of the positive electrode lead-out piece 141 and the negative electrode lead-out piece 142a in the comparative embodiment and Embodiment 7. FIG. 36 shows temperature rise curves of the positive electrode lead-out piece 141 and the negative electrode lead-out piece 142a in the comparative embodiment and Embodiment 8.

**Table 2**

| | S_{positive lead}/mm² | s_{negative lead}/mm² | C/Ah | C/s_{positive lead} | C/s_{negative lead} |
|---|---|---|---|---|---|
| Comparative Embodiment | 25 | 22 | 400 | 16 | 18.18181818 |
| Embodiment 1 | 14 | 10 | 30 | 2.142857143 | 3 |
| Embodiment 2 | 15 | 10 | 120 | 8 | 12 |
| Embodiment 3 | 20 | 12 | 180 | 9 | 15 |
| Embodiment 4 | 50 | 80 | 230 | 4.6 | 2.875 |
| Embodiment 5 | 80 | 50 | 400 | 5 | 8 |
| Embodiment 6 | 30 | 50 | 360 | 12 | 7.2 |
| Embodiment 7 | 100 | 100 | 380 | 3.8 | 3.8 |
| Embodiment 8 | 150 | 130 | 400 | 2.666666667 | 3.076923077 |

Compared with the comparative embodiment, the temperature rises of the positive electrode lead-out piece 141 and the negative electrode lead-out piece 142 in Embodiments 1 to 8 are relatively low, thus ensuring that the batteries are in a good working status.

Further, as shown in FIGs. 13-14, the positive electrode lead-out piece 141 and the negative electrode lead-out piece 142 have the same structure and include connected first connecting sheet and second connecting sheet. The second connecting sheet of the positive electrode lead-out piece 141 directly faces the fifth plate member 115 and is fixedly connected to the positive electrode tab of the electrode core 120. The first connecting sheet of the positive electrode lead-out piece 141 directly faces the first plate member 111 and is connected to the positive electrode conductive pole 131. The second connecting sheet of the negative electrode lead-out piece 142 directly faces the fifth plate member 115 and is fixedly connected to the negative electrode tab of the electrode core 120. The first connecting sheet of the negative electrode lead-out piece 142 directly faces the second plate member 112 and is connected to the negative electrode conductive pole 132. For ease of description, the first connecting sheet of the positive electrode lead-out piece 141 is designated as positive electrode first connecting sheet 141a, and the second connecting sheet of the positive electrode lead-out piece 141 is designated as positive electrode second connecting sheet 141b. Similarly, the first connecting sheet of the negative electrode lead-out piece 142 is designated as negative electrode first connecting sheet 142a, and the second connecting sheet of the negative electrode lead-out piece 142 is designated as negative electrode second connecting sheet 142b.

In some embodiments of the present disclosure, the positive electrode first connecting sheet 141a and the negative electrode first connecting sheet 142a have a size ranging from 0.8 mm to 0.2 mm in the length direction of the battery casing.

The battery casing 110 includes the first plate member 111 and the second plate member 112 directly facing each other in the length direction. The first connecting sheet of the positive electrode lead-out piece 141 is parallel to the first plate member 111, and the first connecting sheet of the negative electrode lead-out piece 142 is parallel to the second plate member 112.

A first insulating spacer ring 161 is arranged between the positive electrode lead-out piece 141 and the first plate member 111. The positive electrode conductive pole 131 extends through the first insulating spacer ring 161 and is connected to the positive electrode lead-out piece 141. A second insulating spacer ring 162 is arranged between the negative electrode lead-out piece 142 and the second plate member 112. The negative electrode conductive pole 132 extends through the second insulating spacer ring 162 and is connected to the negative electrode lead-out piece 142. In this way, the direct contact of the positive electrode lead-out piece and the 141 and the negative electrode lead-out piece 142 with the battery casing 110 can be avoided, thus improving the safety performance of the battery 100.

At least a portion of the first insulating spacer ring 161 is arranged between the second connecting sheet of the positive electrode lead-out piece 141 and the fifth plate member 115. At least a portion of the second insulating spacer ring 162 is arranged between the second connecting sheet of the negative electrode lead-out piece 142 and the fifth plate member 115. That is to say, the first insulating spacer ring 161 can not only separate the positive electrode lead-out piece 141 from the first plate member 111, but also separate the positive electrode lead-out piece 141 from the fifth plate member 115. The second insulating spacer ring 162 can not only separate the negative electrode lead-out piece 142 from the second plate member 112, but also separate the negative electrode lead-out piece 142 from the fifth plate member 115.

As shown in FIGs. 1-14, the first insulating spacer ring 161 includes a first support member 161a and a first insulating member connected to the first support member 161a. An inner end and an outer end of the first support member 161a abut against an end of the electrode core 120 and the first plate member 111 of the battery 100 respectively. The first insulating member fits with the positive electrode lead-out piece 141 and is arranged between the positive electrode lead-out piece 141 and the battery casing 110. The second insulating spacer ring 162 includes a second support member 162a and a second insulating member connected to the second support member 162a. An inner end and an outer end of the second support member 162a abut against an end of the electrode core 120 and the second plate member 112 of the battery 100 respectively. The second insulating member fits with the negative electrode lead-out piece 142 and is arranged between the negative electrode lead-out piece 142 and the battery casing 110.

The first insulating member includes a first insulating member vertical plate 161b and a first insulating member horizontal plate 161c. The first insulating member vertical plate 161b is arranged between the positive electrode first connecting sheet 141a and the first plate member 111, and the first insulating member horizontal plate 161c is arranged between the positive electrode second connecting sheet 141b and the fifth plate member 115. The second insulating member includes a second insulating member vertical plate 162b and a second insulating member horizontal plate 162c. The second insulating member vertical plate 162b is arranged between the negative electrode first connecting sheet 142a and the second plate member 112, and the second insulating member horizontal plate 162c is arranged between the negative electrode second connecting sheet 142b and the fifth plate member 115.

A thickness of the first support member 161a in the length direction of the battery casing 110 is larger than a thickness of the first insulating member vertical plate 161b in the length direction of the battery casing 110. Therefore, the first support member 161a can abut against one end portion of the electrode core 120. A thickness of the second support member 162a in the length direction of the battery casing 110 is larger than a thickness of the second insulating member vertical plate 162b in the length direction of the battery casing 110. Therefore, the second support member 162a can abut against another end portion of the electrode core 120. Therefore, the first support member 161a and the second support member 162a can jointly abut against the electrode core 120 in the length direction of the battery casing 110, to avoid the movement of the electrode core 120 in the length direction of the battery casing 110.

Particularly, the first insulating member vertical plate 161b is arranged between the positive electrode first connecting sheet 141a and the first plate member 111, and the first insulating member horizontal plate 161c is arranged between the positive electrode second connecting sheet 141b and the fifth plate member 115. The second insulating member vertical plate 162b is arranged between the negative electrode first connecting sheet 142a and the second plate member 112, and the second insulating member horizontal plate 162c is arranged between the negative electrode second connecting sheet 142b and the fifth plate member 115.

The positive electrode lead-out piece 141 and the first insulating member are both configured as an "L"-shaped structure. The positive electrode lead-out piece 141 can be arranged at an inner side of the first insulating member and attached thereto. The negative electrode lead-out piece 142 and the second insulating member are both configured as an "L"-shaped structure. The negative electrode lead-out piece 142 can be arranged at an inner side of the second insulating spacer ring and attached thereto.

In some embodiments of the present disclosure, both the first insulating member vertical plate 161b and the positive electrode first connecting sheet 141a have a size ranging from 0.3 mm to 1.5 mm in the length direction of the battery casing 110. That is, both the first insulating member vertical plate 161b and the positive electrode first connecting sheet 141a have a thickness ranging from 0.3 mm to 1.5 mm.

As a result, this can ensure the insulation between the positive electrode lead-out piece 141 and the battery casing 110 and between the negative electrode lead-out piece 142 and the battery casing 110 and occupies as little space as possible in the length direction in the battery casing 110. When the thickness is less than 0.3 mm, it is possible that the welding heat will melt the spacer ring when the tab is welded to the lead-out piece, resulting in insufficient insulation. When the thickness is greater than 1.5 mm, too much space in the battery casing 110 is occupied, which reduces the space utilization rate and affects the design capacity of the battery 100.

The battery 100 according to an embodiment of the present disclosure further includes a sealing ring. The sealing ring is hermetically connected between the conductive pole and the battery casing 110. The sealing ring is configured as an elastic member and the sealing ring is an insulating member, to effectively electrically insulate the lead-out piece from the battery casing 110. An initial size of the sealing ring in its axial direction is d1, a size of the sealing ring after axial compression is d2, and d1 and d2 meet 0.5≤d2/d1≤0.9, where d1 and d2 are both in mm.

In some embodiments, the sealing ring is sleeved on the conductive pole and switched between an inner wall of the battery casing 110 and the lead-out piece. It should be noted that the initial size d1 of the sealing ring in its axial direction can be understood as the axial dimension of the sealing ring after it is released from compression and elastically restored (d1 is the distance between two axially opposite end faces of the sealing ring after it is restored). When the sealing ring is clamped between the inner wall of the battery casing and the lead-out piece, d2 can be understood as the distance between two axially opposite surfaces of the sealing ring. One of the two surfaces is the surface of the sealing ring that is in contact with the inner wall of the battery casing, and the other is the surface of the sealing ring that is in contact with the lead-out piece.

The initial size of the sealing ring in the axial direction is the size of the sealing ring in the axial direction before compression. After the sealing ring is compressed, the size of the sealing ring in the axial direction will decrease. By defining the ratio of the post-compression size to the initial size of the sealing ring, the sealing ring is ensured to have a certain amount of compression, to facilitate the installation of the lead-out piece and a conductive pole setting spacer ring, and ensure a sealing performance between the lead-out piece and the battery casing 110 and a sealing performance between the conductive pole and the sealing ring. Moreover, the capacity of the battery is improved, given the same size of the battery.

Since the size of the sealing ring in the axial direction decreases after being compressed, the size in the radial direction naturally increases. Both side surfaces of the sealing ring in the axial direction are annular. An outer end of the sealing ring in the axial direction is in contact with the inner wall surface of the battery casing 110. An inner end of the sealing ring in the axial direction is in contact with the lead-out piece. Accordingly, two ends of the sealing ring in the axial direction are sandwiched between the battery casing 110 and the lead-out piece.

At least one of a width of a contact area between the sealing ring and the inner wall surface of the battery casing 110 and a width of a contact area between the sealing ring and the lead-out piece is W, and W meets: 1.2 mm ≤ W ≤ 2.5 mm. Therefore, the sealing performance between the sealing ring and the inner wall surface of the battery casing 110 and the sealing performance between the sealing ring and the lead-out piece are ensured. The width of the contact area between the sealing ring and the inner wall surface of the battery casing 110 can be understood as the distance between two outer contours of the contact area between the sealing ring and the inner wall surface of the battery casing 110 in the radial direction of the sealing ring. The width of the contact area between the sealing ring and the lead-out piece can be understood as the distance between two outer contours of the contact area between the sealing ring and the lead-out piece in the radial direction of the sealing ring.

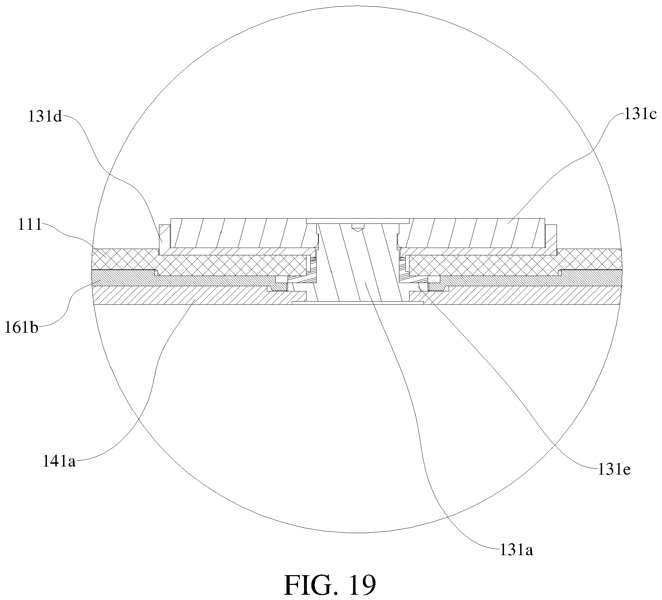

In some other embodiments of the present disclosure, as shown in FIGs. 19 and 20, the sealing ring is sleeved onto the conductive pole, an outer peripheral surface of the conductive pole is arranged with a flanged edge, the flanged edge is connected to the lead-out piece, and at least of a portion of the sealing ring is sandwiched between the flanged edge and the inner wall of the battery casing. It should be noted that when the sealing ring is clamped between the inner wall of the battery casing and the flanged edge, d2 can be understood as the distance between two axially opposite surfaces of the sealing ring. One of the two surfaces is the surface of the sealing ring that is in contact with the inner wall of the battery casing, and the other is the surface of the sealing ring that is in contact with the flanged edge.

That is to say, the inner end of the sealing ring does not abut against the lead-out piece, but abuts against the flanged edge of the conductive pole. Particularly, the sealing ring includes a first sealing ring 151 and a second sealing ring 152. The first sealing ring 151 is sleeved on the positive electrode conductive pole. One portion of the first sealing ring 151 extends into the via hole 102 on the first plate member 111, and the other portion of the first sealing ring 151 is sandwiched between a positive electrode conductive pole flanged edge 131e of the positive electrode conductive pole and the first plate member 111. The second sealing ring 152 is sleeved on the negative electrode conductive pole. One portion of the second sealing ring 152 extends into the via hole 102 on the second plate member 112, and the other portion of the second sealing ring 152 is sandwiched between a negative electrode conductive pole flanged edge132e of the negative electrode conductive pole and the second plate member 112.

In some embodiments of the present disclosure, a spacer ring is arranged between the lead-out piece and the battery casing 110. The conductive pole and the sealing ring extend through the spacer ring. The inner end of the conductive pole is connected to the lead-out piece, and the inner end of the sealing ring abuts against the lead-out piece. The sealing ring is sleeved on the outer peripheral surface of the conductive pole, and the sealing ring can be inserted, together with the conductive pole, into the via hole on the battery casing 110 for the conductive pole to extend through. Moreover, the sealing ring may not enter the via hole. The sealing ring can ensure that the conductive pole will not move in the radial direction of the via hole to avoid its contact with an inner peripheral wall of the via hole.

Particularly, one portion of the inner end of the sealing ring fits with a step portion on the spacer ring, to limit the movement of the sealing ring and the conductive pole in the radial direction of the via hole, and the other portion of the inner end of the sealing ring abuts against the lead-out piece.

In some embodiments of the present disclosure, the spacer ring includes a support member and an insulating member connected to the support member. An inner end and an outer end of the support member abut against the electrode core 120 and the battery casing 110 of the battery 100 respectively. The insulating member fits with the lead-out piece and is arranged between the lead-out piece and the battery casing 110.

The structures of the insulating member and the lead-out piece can be roughly the same, for example, they both are "L"-shaped. The insulating member includes connected insulating member vertical plate and insulating member horizontal plate. The lead-out piece includes connected first connecting sheet and second connecting sheet. The insulating member vertical plate can be arranged between the first connecting sheet and one side plate of the casing, and the insulating member horizontal plate can be arranged between the second connecting sheet and one side plate of the casing.

In some embodiments of the present disclosure, the battery casing 110 is configured as an aluminum alloy component, and the plate thickness of the lower casing and the plate thickness of the sixth plate member 116 range from 0.2 mm to 0.5 mm. Due to the low hardness of the aluminum alloy component, the lower casing and the sixth plate member 116 are set to have a large plate thickness, to ensure the structural strength of the battery casing 110.

In some other embodiments of the present disclosure, the battery casing 110 is configured as a stainless steel component or a nickel plated steel component, and the plate thickness of the lower casing and the plate thickness of the sixth plate member 116 range from 0.05 mm to 0.2 mm. Due to the high hardness of the stainless steel component or the nickel plated steel component, the lower casing and the sixth plate member 116 are set to have a relatively small plate thickness, to reduce the manufacturing cost of the battery casing 110 on the premise of ensuring the structural strength of the battery casing 110.

It should be noted that the plate thickness of the lower casing is the plate thickness of any one of the first plate member 111, the second plate member 112, the third plate member 113, the fourth plate member 114 and the fifth plate member 115.

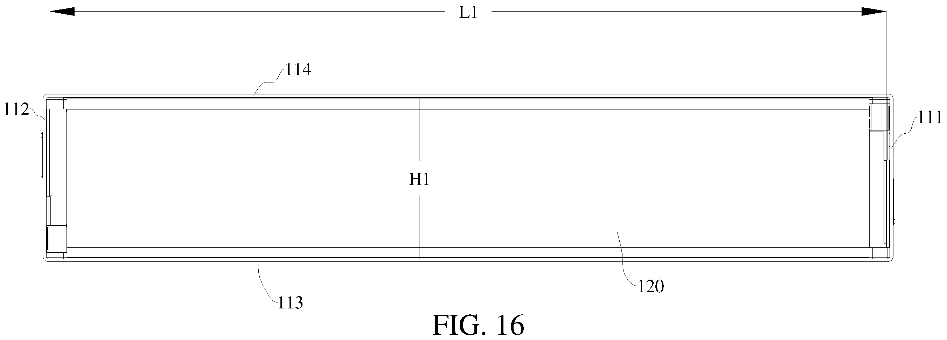

As shown in FIGs. 16-18, the positive electrode lead-out piece 141 and the negative electrode lead-out piece 142 are arranged inside the battery casing 110, and the positive electrode lead-out piece 141 and the negative electrode lead-out piece 142 are respectively connected to the positive electrode tab and the negative electrode tab of the electrode core 120. The positive electrode lead-out piece 141 includes a positive electrode first connecting sheet 141a, and the negative electrode lead-out piece 142 includes a negative electrode first connecting sheet 142a. The positive electrode first connecting sheet 141a and the negative electrode first connecting sheet 142a are distributed at two opposite ends of the electrode core 120 along the length direction of the battery casing 110. A distance between the positive electrode first connecting sheet 141a and the negative electrode first connecting sheet 142a in the length direction of the battery casing 110 is L1, a size of the battery 100 in the length direction of the battery casing 110 is L, and L1 and L meet 0.95≤L1/L≤0.99. It can be understood that the positive electrode first connecting sheet 141a has a first surface facing the negative electrode first connecting sheet 142a, and the negative electrode first connecting sheet 142a has a second surface facing the positive electrode first connecting sheet 141a. A distance between the first surface of the positive electrode first connecting sheet 141a and the second surface of the negative electrode first connecting sheet 142a in the length direction of the battery casing 110 is L1. The battery casing 110 has opposite first surface and second surface in its length direction, and a distance between the first surface and the second surface of the battery casing 110 in the length direction of the battery casing 110 is L. It should be noted that the length direction of the battery casing 110 is consistent with the length direction of the battery 100.

In some embodiments, since the positive electrode lead-out piece 141 includes the connected positive electrode second connecting sheet 141b and positive electrode first connecting sheet 141a, and the negative electrode lead-out piece 142 includes the connected negative electrode second connecting sheet 142b and negative electrode first connecting sheet 142a, "L1" in the present disclosure is a distance between an inner side surface of the positive electrode first connecting sheet 141a and an inner side surface of the negative electrode first connecting sheet 142a in the length direction of the battery casing 110.

L1 and L meet: 0.95≤L1/L≤0.99, which ensures that the positive electrode lead-out piece 141 and the negative electrode lead-out piece 142 have sufficient conductivity, and the positive electrode lead-out piece 141 and the negative electrode lead-out piece 142 will not occupy too much space inside the battery casing 110, especially the space in the length direction of the battery casing 110.

In some embodiments of the present disclosure, a thickness of the positive electrode first connecting sheet 141a ranges from 0.6 mm to 2 mm, and a thickness of the negative electrode first connecting sheet 142a ranges from 0.6 mm to 2 mm. The thickness of the positive electrode first connecting sheet 141a refers to a size of the positive electrode first connecting sheet 141a in the length direction of battery casing, and the thickness of the negative electrode first connecting sheet 142a refers to a size of the negative electrode first connecting sheet 142a in the length direction of battery casing.

The positive electrode lead-out piece 141 is L-shaped and can be an integral member, and the negative electrode lead-out piece 142 is L-shaped and can be an integral member. The thickness of the positive electrode lead-out piece 141 may be the thickness of the positive electrode first connecting sheet 141a. The thickness of the negative electrode lead-out piece 142 may be the thickness of the negative electrode first connecting sheet 142a. This is because the thickness of the positive electrode first connecting sheet 141a and the thickness of the negative electrode first connecting sheet 142a will affect the extent of occupation of the positive electrode lead-out piece 141 and the negative electrode lead-out piece 142 in the space in the length direction of the battery casing 110. Therefore, the thickness of the positive electrode lead-out piece 141 is defined to range from 0.6 mm to 2 mm, and the thickness of the negative electrode lead-out piece 142 is defined to range from 0.6 mm to 2 mm. This ensures that the positive electrode lead-out piece 141 and the negative electrode lead-out piece 142 will not occupy too much space inside the battery casing 110, especially the space in the length direction of the battery casing 110. Therefore, give the same size of the battery, the battery capacity is improved. The positive electrode conductive pole 131 is arranged on the first plate member 111, and the negative electrode conductive pole 132 is arranged on the second plate member 112. However, the positive electrode conductive pole 131 is not in direct contact with the first plate member 111 and the negative electrode conductive pole 132 is not in direct contact with the second plate member 112.

The positive electrode first connecting sheet 141a is parallel to the first plate member 111 and connected to the positive electrode conductive pole 131. The negative electrode first connecting sheet 142a is parallel to the second plate member 112 and connected to the negative electrode conductive pole 132. The distance between the inner side surface of the positive electrode first connecting sheet 141a and the inner side surface of the negative electrode first connecting sheet in the length direction of the battery casing 110 is "L1".

In some embodiments, the electrode core 120 has opposite first and second end surfaces. The positive electrode tab of the electrode core 120 is led out from the first end surface, and the negative electrode tab of the electrode core 120 is led out from the second end surface. A distance between the first end surface of the electrode core 120 and the positive electrode first connecting sheet 141a ranges from 2 to 12 mm in the length direction of the battery casing 110. A distance between the second end surface of the electrode core 120 and the negative electrode first connecting sheet 142a ranges from 2 to 12 mm in the length direction of the battery casing 110.

The battery casing 110 a third plate member 113 and a fourth plate member 114 directly facing each other in the width direction. A distance between an inner side surface of the third plate member 113 and an inner side surface of the fourth plate member 114 is H1 in the width direction of the battery casing 110, a size of the battery 100 is H in the width direction of the battery casing 110, and H1 and H meet 0.92≤H1/H≤0.98. This ensures that the plate thickness of the third plate member 113 and the fourth plate member 114 enables the battery casing 110 to have sufficient strength, and prevents reduced internal space in the battery casing 110 due to a too large plate thickness of the third plate member 113 and the fourth plate member 114, affecting the capacity of the battery 100. It should be noted that the width direction of the battery casing 110 is consistent with the width direction of the battery 100.

In some embodiments of the present disclosure, the battery casing 110 further includes a fifth plate member 115 and a sixth plate member 116 directly facing each other in the thickness direction. A distance between an inner side surface of the fifth plate member 115 and an inner side surface of the sixth plate member 116 in the thickness direction of the battery casing 110 is D1, and a size of the battery 100 in the thickness direction of the battery casing 110 is D, where L>H>D, and D1 and D meet 0.93≤D1/D≤0.99. Therefore, a thickness of the fifth plate member 115 and the sixth plate member 116 is not too large, so that given a definite volume of the battery casing 110, the fifth plate member 115 and the sixth plate member 116 are prevented from occupying too much space in the battery casing 110. Moreover, a certain thickness of the fifth plate member 115 and the sixth plate member 116 can also ensure that the battery casing 110 has sufficient structural strength. It should be noted that the thickness direction of the battery casing 110 is consistent with the thickness direction of the battery 100.

The positive electrode second connecting sheet 141b is connected to the positive electrode first connecting sheet 141a and extends inward in the battery casing 110. The negative electrode second connecting sheet 142b is connected to the negative electrode first connecting sheet 142a and extends inward in the battery casing 110. The positive electrode second connecting sheet 141b and the negative electrode second connecting sheet 142b are both parallel to the fifth plate member 115 and the sixth plate member 116. Particularly, both the positive electrode second connecting sheet 141b and the negative electrode second connecting sheet 142b are attached to the inner side surface of the fifth plate member 115.

The battery according to an embodiment of the present disclosure includes a lower casing and an upper casing. The upper casing and the lower casing can be connected by welding. After the lower casing and the upper casing are fixed together, the upper casing and the lower casing define an accommodating space for accommodating the electrode core 120.

According to some embodiments of the present disclosure, the lower casing includes a first plate member 111 and a second plate member 112, where the first plate member 111 and the second plate member 112 directly face each other in the length direction of the battery 100; a third plate member 113 and a fourth plate member 114, where the third plate member 113 and the fourth plate member 114 directly face each other in the width direction of the battery 100, the third plate member 113 is connected respectively to ends at one side of the first plate member 111 and the second plate member 112 in the width direction of the battery 100, and the fourth plate member 114 is connected respectively to ends at the other side of the first plate member 111 and the second plate member 112 in the width direction of the battery 100; and an peripheral edge of a fifth plate member 115, where the fifth plate member 115 is connected respectively to ends at one side of the first plate member 111, the second plate member 112, the third plate member 113 and the fourth plate member 114 in the thickness direction of the battery 100. The first plate member 111, the second plate member 112, the third plate member 113 and the fourth plate member 114 are configured as peripheral side walls of the lower casing. Therefore, the opening of the lower casing is very large, and thus the electrode core 120 can be conveniently installed in the battery casing 110, which improves the installation efficiency of the battery 100.

Further, the first plate member 111, the second plate member 112, the third plate member 113, the fourth plate member 114, and the fifth plate member 115 are an integral component. The lower casing can be integrally formed by punching a plate. Therefore, the forming efficiency of the lower casing is greatly increased, and the structural strength of the lower casing is also enhanced. The upper casing is configured as a sixth plate member 116, and the sixth plate member 116 and the fifth plate member 115 directly face each other in the thickness direction of the battery 100.

The battery pack according to the present disclosure includes a battery casing 110, an electrode core 120, a lead-out piece and a spacer ring.

As shown in FIGs. 1-15, the battery casing 110 is provided with an accommodating space, and the electrode core 120 and the lead-out piece are arranged in the battery casing 110. The lead-out piece is connected to a tab of the electrode core 120, a portion of the spacer ring is sandwiched between the lead-out piece and the battery casing 110, and the other portion of the spacer ring is sandwiched between an end of the electrode core 120 and the battery casing 110.

That is to say, the spacer ring of the present disclosure can not only separate the lead-out piece from the battery casing 110 to avoid the short circuit caused by the contact between the lead-out piece and the battery casing 110, but also abut against two ends of the electrode core 120 to prevent the electrode core 120 from movement in one direction in the battery casing 110, thereby improving the stability of the electrode core. Therefore, it is ensured that the tab arranged on the electrode core 120 will not move, and the connection stability between the tab and the lead-out piece is also improved.

In some embodiments of the present disclosure, the spacer ring includes a support member and an insulating member connected to the support member. The support member is sandwiched between the end of the electrode core 120 and the battery casing 110. The insulating member fits with the lead-out piece and is sandwiched between the lead-out piece and the battery casing 110. In fact, not only the insulating member itself is an insulating member, but the support member is also an insulating member. The support member and the insulating member can be an integral component.

Two ends of the support member can respectively abut against the end of the electrode core 120 and an inner side wall of the battery casing 110. The insulating member fits with the lead-out piece, and the insulating member is also sandwiched between the lead-out piece and the battery casing 110, so as to avoid electric leakage caused by direct contact between the lead-out piece and the battery casing 110.

Further, the lead-out piece can be "L"-shaped and includes a first connecting sheet and a second connecting sheet. The first connecting sheet and the second connecting sheet are connected. The first connecting sheet is parallel to a side plate of the battery casing 110 in the length direction, second connecting sheet and the second connecting sheet is parallel to a side plate of the battery casing 110 in the thickness direction.

The insulating member is also "L"-shaped and includes an insulating member vertical plate and an insulating member horizontal plate. The insulating member vertical plate and the insulating member horizontal plate are connected. The insulating member vertical plate is arranged between the first connecting sheet and the side plate of the battery casing 110 in the length direction, and the insulating member horizontal plate is arranged between the second connecting sheet and one side plate of the battery casing 110 in the thickness direction.

A size of the support member in the length direction of the battery casing 110 is larger than a size of the insulating member vertical plate in the length direction of the battery casing 110. The support member protrudes toward a center of the battery casing 110 relative to the insulating member vertical plate. Therefore, the support member can abut against an end portion of the electrode core 120, so that the end portion of the electrode core 120 will not abut against the insulating member vertical plate.

It can be understood that the L-shaped lead-out piece can be arranged at an inner side of the L-shaped insulating member, so that the insulating member can completely enclose the lead-out piece to avoid its direct contact with the battery casing 110.

Further, an outer side surface of the support member is leveled with an outer side surface of the insulating member vertical plate, and an inner side surface of the support member is leveled with an inner end of the insulating member horizontal plate. That is to say, the dimension that the support member protrudes inward relative to the insulating member vertical plate is a dimension of the insulating member horizontal plate in the length direction. When the second connecting sheet on the insulating member horizontal plate is superimposed and connected with the tab of the electrode core 120, the support member abuts against the end portion of the electrode core 120 in the length direction.

In some embodiments of the present disclosure, the insulating member vertical plate is provided with an electrolyte solution infiltrating through hole 101 and a via hole for the conductive pole to extend through. The conductive pole extends through the via hole on the insulating member and is connected to the first connecting sheet. The electrolyte solution infiltrating through hole 101 provided on the insulating member can facilitate the injection of an electrolyte solution into the battery casing 110. Moreover, the gas inside the battery casing 110 can also be discharged through the electrolyte solution infiltrating through hole 101. It can be understood that the electrolyte solution infiltrating through hole 101 directly faces a battery 100 explosion-proof valve and an electrolyte solution injection hole on the battery casing 110 in the length direction of the battery casing 110.

In some embodiments of the present disclosure, the battery casing 110 includes a first plate member 111 and a second plate member 112 directly facing each other in the length direction of the battery casing 110, a third plate member 113 and a fourth plate member 114 directly facing each other in the width direction of the battery casing 110, and a fifth plate member 115 and a sixth plate member 116 directly facing each other in the thickness direction of the battery casing 110. The first plate member 111, the second plate member 112, the third plate member 113, the fourth plate member 114 and the fifth plate member 115 define a lower casing win an open end. The sixth plate member 116 is fixed to the lower casing to close the open end.

The lead-out piece includes a positive electrode lead-out piece 141 and a negative electrode lead-out piece 142. The positive electrode lead-out piece 141 is connected respectively to the positive electrode conductive pole 131 and a positive electrode tab of the electrode core 120. The negative electrode lead-out piece 142 is connected respectively to the negative electrode conductive pole 132 and a negative electrode tab of the electrode core 120.

The spacer ring includes a first insulating spacer ring 161 and a second insulating spacer ring 162. A spacer ring vertical plate of the first insulating spacer ring 161 is arranged between the first plate member 111 and the first connecting sheet of the positive electrode lead-out piece 141. A spacer ring horizontal plate of the first insulating spacer ring 161 is arranged between the fifth plate member 115 and the second connecting sheet of the positive electrode lead-out piece 141. A spacer ring vertical plate of the second insulating spacer ring 162 is arranged between the second plate member 112 and the first connecting sheet of the negative electrode lead-out piece 142. A spacer ring horizontal plate of the second insulating spacer ring 162 is arranged between the fifth plate member 115 and the second connecting sheet of the negative electrode lead-out piece 142.

The electrode core 120 is directly placed in the lower casing, and then the tab and the lead-out piece are welded by laser welding, electric-resistance welding or other welding methods. The lead-out piece is designed to be L-shaped, which is convenient for the welding with the tab. After the electrode core 120 is placed in the battery casing, the tab can be superimposed with the lead-out piece in a natural straight state, and then welded together, thus avoiding the risk of contact of the positive and negative electrodes after the tab is bent, shortening the tab size, increasing the utilization rate of the metal current collector, improving the process yield and reducing the product cost.

After the tab of the electrode core 120 is welded with the lead-out piece of the lower casing, the upper casing (the sixth plate member 116) is assembled. After the upper casing and the lower casing are assembled, the upper casing and the lower casing are hermetically connected at the edge by laser welding or roll sealing, so that the upper and lower casing form a sealed body.

After the battery casing 110 is assembled, an electrolyte solution can be injected through the electrolyte solution injection hole. After the injection is completed, the electrolyte solution injection hole needs to be sealed by welding a metal sheet or by a plastic nail. The battery 100 explosion-proof valve is arranged on the first plate member 111 or the second plate member 112, and one or more explosion-proof valves can be arranged on the first plate member 111 or the second plate member 112.

The explosion-proof valve is formed by laser scoring or directly punching the side plate of the battery casing 110, or a hole with the same shape and size with the explosion-proof valve is punched on the battery casing 110, and then the explosion-proof valve is welded on the battery casing 110.

According to some embodiments of the present disclosure, the lead-out piece is "L"-shaped, and the second connecting sheet is connected to a side edge of the first connecting sheet and extends inward in the casing. The second connecting sheet extending inward in the casing can be attached to and welded with multiple tabs, so that the multiple tabs will not be bent too much, and the tabs will be much flattened during and after welding.

In some other embodiments of the present disclosure, the lead-out piece is "T"-shaped, and the second connecting sheet is connected to a middle area of the first connecting sheet and extends inward in the battery casing 110. Because the T-shaped lead-out piece still has the second connecting sheet extending inward in the casing, the tab can still be welded with the second connecting sheet flatly, and the tab will not be bent too much, which greatly improves the connection stability between the tab and the lead-out piece. Some of the multiple tabs can be welded on one side of the second connecting sheet in the thickness direction, and the others of the multiple tabs can be welded on the other side of the second connecting sheet in the thickness direction.

The first connecting sheet can be parallel to the first plate member 111 and the second plate member 112, and the conductive pole can extend through the first plate member 111 or the second plate member 112 and is connected to the first connecting sheet.

The conductive pole includes a positive electrode conductive pole 131 and a negative electrode conductive pole 132. The lead-out piece includes a positive electrode lead-out piece 141 and a negative electrode lead-out piece 142. The positive electrode conductive pole 131 extends through the first plate member 111 and is connected to the first connecting sheet of the positive electrode lead-out piece 141. The negative electrode conductive pole 132 extends through the second plate member 112 and is connected to the first connecting sheet of the negative electrode lead-out piece 142. Meanwhile, the second connecting sheet is parallel to the fifth plate member 115 or the sixth plate member 116.

It should be noted that in the battery 100 of the present disclosure, the conductive pole includes a positive electrode conductive pole 131 and a negative electrode conductive pole 132, the lead-out piece includes a positive electrode lead-out piece 141 and a negative electrode lead-out piece 142, and the tab includes a positive electrode tab and a negative electrode tab. The positive electrode lead-out piece 141 includes a positive electrode first connecting sheet 141a and a positive electrode second connecting sheet 141b. The negative electrode lead-out piece 142 includes a negative electrode first connecting sheet 142a and a negative electrode second connecting sheet 142b.

The spacer ring is arranged between the lead-out piece and the battery casing 110, and the conductive pole extends through the lead-out piece and is connected to the spacer ring. The spacer ring can prevent the direct contact between the lead-out piece and the battery casing 110, thus avoiding the presence of charged battery casing 110 and improving the safety performance of the battery 100.

In some embodiments of the present disclosure, the spacer ring includes a support member and an insulating member connected to the support member. The support member is sandwiched between the end of the electrode core 120 and the battery casing 110. The insulating member fits with the lead-out piece and is sandwiched between the lead-out piece and the battery casing 110. In fact, not only the insulating member itself is an insulating member, but the support member is also an insulating member. The support member and the insulating member can be an integral component.

The insulating member is also "L"-shaped and includes an insulating member vertical plate and an insulating member horizontal plate. The insulating member vertical plate and the insulating member horizontal plate are connected. The insulating member vertical plate is arranged between the first connecting sheet and the side plate of the battery casing 110 in the length direction, and the insulating member horizontal plate is arranged between the second connecting sheet and one side plate of the battery casing 110 in the thickness direction.

A battery pack according to an embodiment of the present disclosure is briefly described below.

The battery pack according to an embodiment of the present disclosure includes the battery 100 as described above. Since the battery pack according to the embodiment of the present disclosure is arranged with the battery 100, the safety performance of the battery pack is high, and the power of the battery pack is further increased.

A vehicle according to an embodiment of the present disclosure is briefly described below.

The vehicle according to an embodiment of the present disclosure includes the battery pack as described above. Since the vehicle according to the embodiment of the present disclosure is arranged with the battery pack, the battery life of the vehicle is greatly improved, and the electrical safety performance of the vehicle is also greatly improved.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example. Moreover, the described specific features, structures, materials or characteristics may be combined in any suitable manner in one or more embodiments.

Although embodiments of the present disclosure are illustrated and described above, it can be understood by those skilled in the art that various changes, modifications, replacements and variations may be made to the embodiments without departing from the principles and spirit of the present disclosure, and the scope of the present disclosure is as defined by the appended claims and their equivalents.

## Claims

1. A battery (100), comprising:
a battery casing (110);
an electrode core (120), the electrode core (120) being arranged in the battery casing (110);
a positive electrode lead-out piece (141), the positive electrode lead-out piece (141) being arranged in the battery casing (110) and connected to a positive electrode tab of the electrode core (120); and
a negative electrode lead-out piece (142), the negative electrode lead-out piece (142) being arranged in the battery casing (110) and connected to a negative electrode tab of the electrode core (120);
the positive electrode lead-out piece (141) comprising a positive electrode first connecting sheet (141a), and the negative electrode lead-out piece (142) comprising a negative electrode first connecting sheet (142a); the positive electrode first connecting sheet (141a) and the negative electrode first connecting sheet (142a) being distributed at two opposite ends of the electrode core (120) along a length direction of the battery casing (110); a distance between the positive electrode first connecting sheet (141a) and the negative electrode first connecting sheet (142a) in the length direction of the battery casing (110) being L1, a size of the battery (100) in the length direction of the battery casing (110) being L, L1 and L meeting 0.95≤L1/L≤0.99, and L1 and L being both in mm.

2. The battery (100) according to claim 1, wherein a thickness of the positive electrode first connecting sheet (141a) and a thickness of the negative electrode first connecting sheet (142a) are both range from 0.6 mm to 2 mm.

3. The battery (100) according to claim 1, wherein the electrode core (120) has opposite first and second end surfaces; the positive electrode tab of the electrode core (120) is led out from the first end surface, and the negative electrode tab of the electrode core (120) is led out from the second end surface; a distance between the first end surface of the electrode core (120) and the positive electrode first connecting sheet (141a) ranges from 2 to 12 mm in the length direction of the battery casing (110); and a distance between the second end surface of the electrode core (120) and the negative electrode first connecting sheet (142a) ranges from 2 to 12 mm in the length direction of the battery casing (110).

4. The battery (100) according to claim 1, wherein the battery casing (110) comprises a first plate member (111) and a second plate member (112) directly facing each other in the length direction; the first plate member (111) is arranged with a positive electrode conductive pole (131), and the second plate member (112) is arranged with a negative electrode conductive pole (132); an inner end of the positive electrode conductive pole (131) is connected to the positive electrode first connecting sheet (141a); and an inner end of the negative electrode conductive pole (132) is connected to the negative electrode first connecting sheet (142a).

5. The battery (100) according to claim 4, wherein the battery casing (110) further comprises a third plate member (113) and a fourth plate member (114) directly facing each other in a width direction; and a distance between an inner side surface of the third plate member (113) and an inner side surface of the fourth plate member (114) is H1 in the width direction of the battery casing (110), a size of the battery (100) is H in the width direction of the battery casing (110), and H1 and H meet 0.92≤H1/H≤0.98, wherein H1 and H are both in mm.

6. The battery (100) according to claim 5, wherein the battery casing (110) further comprises a fifth plate member (115) and a sixth plate member (116) directly facing each other in a thickness direction; and a distance between an inner side surface of the fifth plate member (115) and an inner side surface of the sixth plate member (116) in the thickness direction of the battery casing (110) is D1, and a size of the battery (100) in the thickness direction of the battery casing (110) is D, L>H>D, and D1 and D meet 0.93≤D1/D≤0.99, wherein D1 and D are both in mm.

7. The battery (100) according to claim 6, wherein the first plate member (111), the second plate member (112), the third plate member (113), the fourth plate member (114) and the fifth plate member (115) define a lower casing with an opening at a side, and the sixth plate member (116) is fixedly connected to the lower casing to close an open end of the lower casing.

8. The battery (100) according to claim 1, wherein the positive electrode lead-out piece (141) further comprises a positive electrode second connecting sheet (141b) connected to the positive electrode first connecting sheet (141a) and extending inward in the battery casing (110), and the positive electrode lead-out piece (141) is connected, by the positive electrode second connecting sheet (141b), to the positive electrode tab of the electrode core (120); and the negative electrode lead-out piece (142) further comprises a negative electrode second connecting sheet (142b) connected to the negative electrode first connecting sheet (142a) and extending inward in the battery casing (110), and the negative electrode lead-out piece (142) is connected, by the negative electrode second connecting sheet (142b), to the negative electrode tab of the electrode core (120).

9. A battery pack, comprising a battery (100) according to any one of claims 1 to 8.

10. A vehicle, comprising a battery pack according to claim 9.
